# EUROPEAN PATENT SPECIFICATION

(11) **EP 3 193 232 B1**
(45) Date of publication and mention of the grant of the patent: **29.07.2020**
(21) Application number: 16171957.0
(22) Date of filing: 30.05.2016
(51) Int. Cl.: G05G 25/04, B60R 21/13

(54) **TRACTOR AND WORK VEHICLE**
TRAKTOR UND ARBEITSFAHRZEUG
TRACTEUR ET VÉHICULE DE TRAVAIL

(30) Priority: 24.12.2015 JP 2015252386; 24.12.2015 JP 2015252387
(43) Date of publication of application: 19.07.2017
(60) Divisional application: 20179578.8
(73) Proprietor: Kubota Corporation, Osaka-shi, Osaka 556-8601 (JP)
(72) Inventor: NAKAJIMA, Kenichiro, SAKAI-SHI, OSAKA, 5900823 (JP); SUMI, Yuki, SAKAI-SHI, OSAKA, 5900823 (JP); NAKAMURA, Tadashi, SAKAI-SHI, OSAKA, 5900823 (JP); KAWAI, Misako, SAKAI-SHI, OSAKA, 5900823 (JP); MARUYAMA, Katsushi, SAKAI-SHI, OSAKA, 5900823 (JP); KASHIYAMA, Shinsuke, SAKAI-SHI, OSAKA, 5900823 (JP); YASUMURA, Koki, SAKAI-SHI, OSAKA, 5900823 (JP); YAMANAKA, Satoru, SAKAI-SHI, OSAKA, 5900823 (JP); NISHINO, Kunihiko, SAKAI-SHI, OSAKA, 5900823 (JP); SAWAI, Megumi, SAKAI-SHI, OSAKA, 5900823 (JP)
(74) Representative: Cabinet Beau de Loménie

(56) References cited:
- EP-A1- 2 862 751
- JP-A- 2007 145 143
- US-A- 3 341 247
- US-A1- 2007 020 068
- US-A1- 2010 012 412
- US-A1- 2013 213 178
- US-A1- 2015 084 321

## Description

### TECHNICAL FILED OF THE INVENTION

The present invention relates to work vehicles such as tractors.

### DESCRIPTION OF THE RELATED ART

### [1] First Related Art

An example of a tractor is disclosed in JP H09-030350 A. The tractor includes a driver's seat mounted rearward of a vehicle body, right and left fenders mounted laterally outward of the driver's seat, and an inversed U-shaped protection frame mounted rearward of the vehicle body in standing position.

With such an arrangement, space is defined between a backrest of the driver's seat and right and left posts of the protection frame, through which space some foreign matter might enter a driver's region from behind.

In particular, where a control element is provided laterally outward of the driver's seat, any foreign matter which has entered the driver's region through the space might disadvantageously interfere with the control element.

Under the circumstances, it has been desired to prevent foreign matter from entering the driver's region from behind through the space defined laterally outward of the backrest.

### [2] Second Related Art

An example of a work vehicle such as a tractor is disclosed in JP 2014-227126 A and JP 2015-191469 A (WO 2015/146901 A1). The work vehicle is designed to allow the driver to board or leave the vehicle from a lateral side of the vehicle, including handrails mounted on top surfaces of right and left fenders.

With the above conventional arrangement, when boarding or leaving the vehicle from the lateral side of the vehicle, the driver can grip one of the handrails with his or her hand closer to a rear side of the vehicle body.

However, the driver can only simply put the other hand closer to a front side of the vehicle body on an outer surface of a front part of the vehicle body because the handrails are provided only in the right and left fenders. Thus, there is room for improvement for easy access to the vehicle from the lateral side of the vehicle.

More particularly, it has been desired to allow the driver to more easily board or leave the vehicle from the lateral side of the vehicle.

US 3 341 247 discloses a tractor comprising a driver's seat mounted rearward of a vehicle body; right and left fenders mounted laterally outward of the driver's seat; a protection frame mounted rearward of the vehicle body in standing position and a partition dividing the entire region of the vehicle body into a driver's region and a rear region, the partition being disposed at a lateral side or a rear side of a backrest of the driver's seat and forward of rear ends of the right and left fenders, and the partition having a lateral width thereof smaller than a lateral width between outer ends of the right and left fenders, and greater than a width of the backrest of the driver's seat.

### SUMMARY OF THE INVENTION

In view of the disadvantages above, the present invention provides a tractor as defined in claim 1.

Additional advantageous features are listed below.

According to a preferred embodiment, a control element is provided forward of the partition for controlling a device provided in the vehicle body. Whereby, it is prevented that foreign matter enters the driver's region from behind through the space and interferes with the control element.

According to another preferred embodiment, the device comprises an actuating section for actuating a work implement detachably connected to a rear part of the vehicle body. The control element may comprise a work control element for manually operating the actuating section; and the actuating section is mounted rearward of the partition.

For instance, the actuating section may comprise a lift device for vertically moving the work implement; and the control element may comprise a lift control lever for manually operating the lift device. Or, the actuating section may comprise a PTO (power takeoff) shaft for outputting power to the work implement; and the control element may comprise a PTO control lever for manually operating power transmission for the PTO shaft.

As a result, it is prevented that the arm of the operator who inspects the actuating section or the work implement in the rear region, for example, inadvertently enters the driver's region through the space and interferes with the control element such as the PTO control lever or the lift control lever. In other words, it is prevented that foreign matter enters the driver's region from behind through the space and interferes with the control element such as the PTO control lever or the lift control lever.

According to another preferred embodiment, the control element is provided laterally outward of the driver's seat, and the partition has a vertical dimension greater than a vertical dimension of a grip of the control element, the partition being provided at a same level as the grip.

For instance, the control element may be provided above the right and left fenders. The partition may have a lateral width greater than a distance between inner ends of the right and left fenders.

As a result, it is more reliably prevented that foreign matter enters the driver's region from behind through the space and interferes with the grip of the control element provided laterally outward of the driver's seat, or interferes with the control element provided above the right or left fender.

According to the invention, the partition has a vertical dimension substantially corresponding to a vertical dimension of the backrest between an upper part and a lower part thereof. As a result, it is prevented that foreign matter enters the driver's region from behind through an area corresponding to the range defined by the vertical dimension of the backrest in the space.

According to another preferred embodiment, the tractor further comprises a protection frame mounted rearward of the vehicle body in standing position, and the partition is supported by the protection frame. As a result, a simplified structure is provided with fewer parts, compared with an arrangement having an additional element exclusively used for supporting the partition.

According to another preferred embodiment, the protection frame has a lower frame component fixed to the vehicle body in standing position, and an upper frame component connected to an upper part of the lower frame component to be vertically pivotable via hinges, and that the partition is provided at a position lower than the hinges. As a result, it is prevented that foreign matter enters the driver's region from behind through the space regardless whether the protection frame is in a position in which the upper frame component is positioned above the lower frame component or in a position in which the upper frame component is positioned rearward of the lower frame component in use.

According to another preferred embodiment, the partition has such a lateral width as preventing the partition from protruding from lateral outer ends of the right and left posts. Or, the partition has a lateral width at least extending between the right and left posts. As a result, it is prevented that foreign matter enters the driver's region from behind through narrower space defined between the right and left posts and the backrest.

According to another preferred embodiment, the tractor further comprises a protection frame mounted rearward of the vehicle body in standing position, and the protection frame includes a right and left posts mounted laterally outward of lateral opposite ends of the backrest. The partition comprises a left wall part having a lateral width extending between the left post and the backrest, and a right wall part having a lateral width extending between the right post and the backrest. As a result, a lightweight vehicle body is achieved compared with an arrangement in which the partition includes a wall part having a width extending between the right and left posts.

According to another preferred embodiment, the partition is provided within a front-back width of the right and left posts. As a result, the right and left posts can conceal lateral outer edge portions of the partition, which prevents foreign matter from interfering with edges of the lateral outer edge portions of the partition without providing any additional element exclusively used for guarding the edges.

According to another preferred embodiment, the partition has transparency. Whereby, good visibility of the rear side of the vehicle body can be provided to the driver even with the partition.

According to another preferred embodiment, the partition includes a principal component comprising a mesh screen. As a result, good visibility of the rear side of the vehicle body can be provided to the driver even with the partition. Additionally, air-permeability is provided between the driver's region and the rear region of the vehicle body, which can avoid accumulation of hot air in the driver's region. Further, resistance applied on the partition during travel of the vehicle can be reduced, which is particularly advantageous when the vehicle travels a road at high speed. Moreover, if mud or wet dirt splashes over the partition during travel of the vehicle in operation, attachment of the mud to the partition can be minimized. In a cold district, it is possible in snowfall to prevent snow from attaching or accumulating to the partition, which always ensures good visibility of the rear side of the vehicle body for the driver without his or her making any effort to remove mud or snow from the partition.

According to another preferred embodiment, the tractor further comprises a license plate holder to which a license plate is attached, and the license plate holder is provided rearward of the partition. As a result, it is prevented that the visibility from behind of the license plate attached to the back of the license plate holder is disadvantageously obstructed by the partition.

According to another preferred embodiment, the tractor further comprises a license plate holder to which a license plate is attached. The protection frame includes a right and left posts, and the license plate holder is mounted between the right and left posts and within the front-back width of the right and left posts. As a result, it is prevented that the visibility from behind of the license plate attached to the back of the license plate holder is disadvantageously obstructed by the partition. Further, the right and left posts conceal lateral outer edge portions of the license plate holder, which prevents foreign matter from interfering with edges of the outer edge portions of the license stayplate holder without providing any additional element for guarding the edges.

An example not covered by the present invention provides a work vehicle comprising:
a driving platform;
a driver's seat mounted rearward of the driving platform between right and left rear propelling devices as viewed from the top;
a steering wheel mounted forward of the driver's seat;
right and left fenders mounted on lateral opposite sides of the driver's seat for covering the right and left rear propelling devices from above;
a boarding section defined on a lateral side of the steering wheel and forward of each of the fenders to allow the driver to board and leave the driving platform;
a passage section defined in the driving platform between the steering wheel and each of the fenders as viewed from the top to connect the boarding section to the driver's seat to allow movement of the driver;
a first handrail mounted forward of the boarding section and gripped by the driver with his or her one hand closer to a front side of the vehicle when boarding or leaving the vehicle, the first handrail having a grip positioned laterally outward of a center of the steering wheel and extending along a lateral direction of the vehicle or extending diagonally rearward and outward of the vehicle; and
a second handrail mounted rearward of the boarding section and gripped by the driver with the other hand closer to a rear side of the vehicle when boarding or leaving the vehicle, the second handrail having a grip extending in a front-back direction of the vehicle as viewed from the top.

With such an arrangement, the driver may grip the first handrail with his or her hand near the front side of the vehicle body and grip the second handrail with the other hand near the rear side of the vehicle body when accessing or leaving the driver's section from the boarding section. This allows the driver to access or leave the driver's section from the boarding section stably and safely with a three-point support established by a foot stepping on the boarding section, one hand gripping the first handrail, and the other hand gripping the second handrail.

Additionally, when climbing into the driver's section from the boarding section, the driver holds the grip of the diagonally extending first handrail with his or her hand near the front side of the vehicle body thereby to easily turn the front of his or her body toward the access space above the passage section which extends diagonally rearward of the vehicle body to the driver's seat toward the center of the vehicle body as viewed from the top.

On the other hand, when moving along the passage section, the driver can hold the grip of the second handrail with his or her hand near the rear side of the vehicle body. This allows the driver to move along the passage section between the boarding section and the driver's seat stably and safely gripping the second handrail with his or her hand near the rear side of the vehicle body.

As a result, the driver can more easily access or leave the driver's section from the boarding section, and easily move along the passage section between the boarding section and the driver's seat.

Additional advantageous features are listed below.

The grip of the first handrail extends diagonally rearward and outward of the vehicle as viewed from the top.

Then, a lateral outer portion of the grip of the first handrail is positioned close to the second handrail compared with an arrangement having the grip of the first handrail extending along a lateral direction of the vehicle body. This allows the driver to easily grip the first handrail and the second handrail with his or her both hands when accessing or leaving the driver's section from the boarding section. Also, the driver, when gripping the front and rear handrails and with both hands, can bring both hands to a position near his or her body where he or she can easily pull his or her body toward the vehicle body with in increased force.

Additionally, when climbing into the driver's section from the boarding section, the driver holds the grip of the diagonally extending first handrail and thus can easily turn the front of his or her body toward the access space defined above the passage section extending diagonally rearward of the vehicle body to the driver's seat toward the center of the vehicle body as viewed from the top.

Further, when the driver moves along the passage section to get off the vehicle from the boarding section, the front of the driver's body turns to the access space above the passage section. In this state, the grip of the first handrail extends from the vehicle body toward the driver's hand near the front side of the vehicle body. This allows the driver to easily hold the grip of the first handrail with his or her hand near the front side of the vehicle body when getting off the vehicle from the boarding section.

As a result, the driver can more easily access or leave the driver's section from the boarding section.

The work vehicle further comprises a display panel provided forward and downward of the steering wheel. The first handrail is positioned forward of the display panel, and the grip of the first handrail is positioned at a same level as the display panel and extends diagonally along a curved portion of the display panel having a front part thereof bulged forward.

Then, the arrangement can avoid excessively narrowing some part of a gap defined between the grip of the first handrail and the front side of the display panel over the entire length of the grip. Thus, the grip of the first handrail can be positioned close to the second handrail, and yet the driver is not obstructed by the display panel when attempting to hold the grip of the first handrail with his or her hand near the front side of the vehicle body. As a result, the driver can more easily hold the grip of the first handrail with his or her hand near the front side of the vehicle body when accessing or leaving the driver's section from the boarding section.

The grip of the first handrail slants outward and downward of the vehicle.

Then, the driver can easily hold the grip of the first handrail with his or hand near the front side of the vehicle body when climbing into the driver's section from the boarding section as compared with an arrangement having the grip of the first handrail extending outward straight at a constant level, for example, because the driver's wrist is brought to an uncomfortable or unnatural position less easily. This allows the driver to easily climb into the driver's section from the boarding section holding the grip of the first handrail. As a result, the driver can more easily access the driver's section from the boarding section.

The grip of the first handrail is arranged closer to a lateral center of the vehicle than the grip of the second handrail as viewed from the top. The work vehicle further comprises an engine compartment mounted forward of the vehicle, and that the first handrail is supported by a frame element extending upward from a vehicle frame between the engine compartment and the steering wheel.

Then, when climbing into the driver's section from the boarding section, the driver holds the grip of the first handrail arranged closer to the lateral center of the vehicle body with his or her hand near the front side of the vehicle body and holds the grip of the second handrail, which is positioned at a lateral outer side of the vehicle body, with the other hand near the rear side of the vehicle body to easily turn the front of his or her body toward the access space above the passage section.

On the other hand, when moving along the left passage section to get off the vehicle from the boarding section, the driver turns the front of his or her body toward the access space above the passage section. In this state, the grip of the first handrail is positioned closer to the lateral center of the vehicle body, which is adjacent to one of the driver's hands near the front side of the vehicle body, and the grip of the second handrail is positioned at the lateral outer side of the vehicle body, which is adjacent to the other of the driver's hands near the rear side of the vehicle body. With such an arrangement, when getting off the vehicle from the boarding section, the driver easily holds the grip of the first handrail with his or hand near the front side of the vehicle body and the grip of the second handrail with the other hand near the rear side of the vehicle body.

Further, the first handrail is firmly supported by the frame element, which inherently has increased strength. This easily provides the first handrail with great supporting strength to bear a pulling force applied on the first handrail when the driver climbs into the driver's section and a pushing force applied on the first handrail when the driver leaves the driver's section.

As a result, such an arrangement easily achieves sufficient, increased supporting strength for the first handrail without providing any additional support element or reinforcement element exclusively used for the first handrail, and also allows the driver to get on or get off the vehicle more easily from the boarding section.

The grip of the second handrail is arranged lower than the grip of the first handrail, and the second handrail is supported by the fender associated therewith, with the grip positioned above the fender.

Then, when climbing into the driver's section from the boarding section, the driver can easily pulls up his or her body by holding the grip of the first handrail positioned at a higher level with his or her hand near the front side of the vehicle, and easily push up his or her body by holding the grip of the second handrail positioned at a lower level with the other hand near the rear side of the vehicle. Thus, the driver can easily get on the vehicle from the boarding section.

Likewise, when getting off the vehicle from the boarding section, the driver can easily support his or her body moving downward by holding the grip of the first handrail positioned at the higher level with his or her hand near the front side of the vehicle, and holding the grip of the second handrail positioned at the lower level with the other hand near the rear side of the vehicle. Thus, the driver can easily get off the vehicle from the boarding section.

Further, the arrangement, in which the second handrail is supported by the fender, provides a simplified structure with a reduced number of parts compared with an arrangement having any additional element exclusively used for supporting the second handrail.

As a result, the simplified structure can be provided, and yet the driver can get on or get off the vehicle more easily from the boarding section.

Other features and advantages will be apparent from the following description in reference to the accompanying drawings.

### BRIEF DESCRIPTION OF THE DRAWINGS

Fig. 1 is a left side view of a tractor according to a first embodiment of the present invention;
Fig. 2 is a top plan view of the tractor according to the first embodiment;
Fig. 3 is a rear view of the tractor according to the first embodiment;
Fig. 4 is a vertical sectional view of a principal part of the tractor to show a construction and arrangement of a partition according to the first embodiment;
Fig. 5 is a horizontal sectional view of a principal part of the tractor according to the first embodiment to show the construction and arrangement of the partition;
Fig. 6 is a perspective view of a principal part of a side brake assembly of the tractor according to the first embodiment to show a construction and configuration of a guard element which prevents foreign matter from interfering with an exposed right edge part of a connecting unit provided between right and side brake pedals;
Fig. 7 is a rear view of a principal part of the tractor according to a modification of the first embodiment, in which the partition is formed of right and left side wall parts extending from right and left posts to a backrest of a driver's seat;
Fig. 8 is a rear view of a principal part of the tractor according to a modification of the first embodiment, showing modified configurations of the partition;
Fig. 9 is a left side view of the tractor according to a modification of the first embodiment including right and left auxiliary partitions;
Fig. 10 is a top plan view, sectioned in part, of the tractor according to the modification of the first embodiment including the right and left auxiliary partitions;
Fig. 11 is a left side view of a tractor according to a second embodiment of the present invention;
Fig. 12 is a top plan view of the tractor according to the second embodiment;
Fig. 13 is top plan view of a principal part of an arrangement around a left boarding section according to the second embodiment;
Fig. 14 is a rear view of a principal part of a first handrail according to the second embodiment to show a configuration and support structure of the first handrail;
Fig. 15 is a vertical sectional left side view of a principal part of a second handrail according to the second embodiment to show a configuration and support structure of the second handrail;
Fig. 16 is a vertical sectional front view or vertical sectional rear view of a principal part of an edge guard structure in the right and left fenders and a driving platform according to the second embodiment;
Fig. 17 is a vertical sectional front view or vertical sectional rear view of a principal part of the edge guard structure in the right and left fenders and the driving platform according to a modification of the second embodiment;
Fig. 18 is a vertical sectional view of a principal part of a lock mechanism for a hood according to the second embodiment;
Fig. 19 is a top plan view of a principal part of the first handrail according to a modification of the second embodiment with a grip extending laterally straight along a lateral direction of a vehicle body; and
Fig. 20 is a front view of a principal part of an arrangement around the second handrail according to a modification of the second embodiment in which the second handrail is formed integrally with lever guides.

### DETAILED DESCRIPTION OF THE INVENTION

### [First Embodiment]

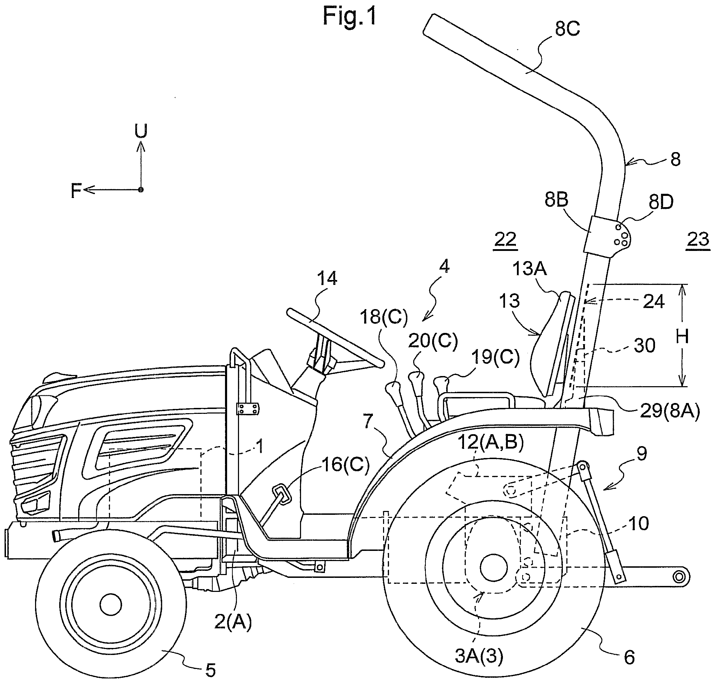

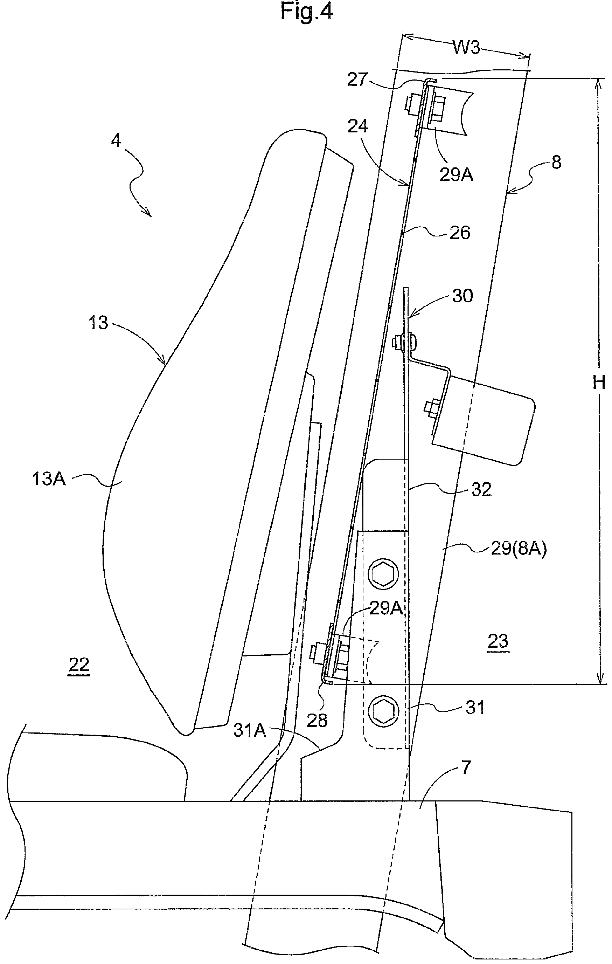

A tractor according to a first embodiment of the present invention will be described hereinafter in detail in reference to Figs. 1 to 10.

In Fig. 1, a front side of the tractor is indicated with an arrow F, and an upper side of the tractor is indicated with an arrow U.

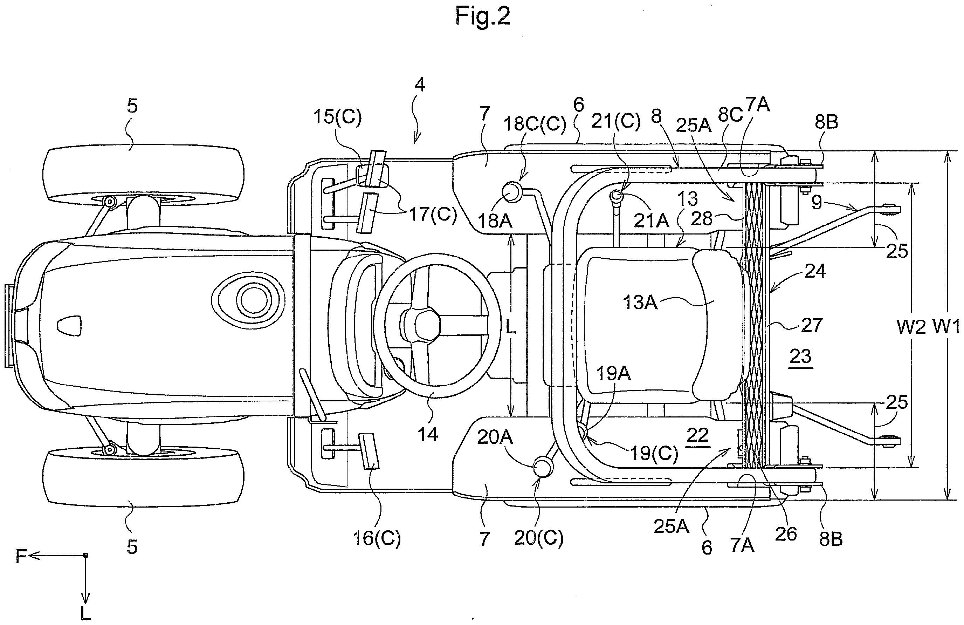

In Fig. 2, the front side of the tractor is indicated with the arrow F, and a left side of the tractor is indicated with an arrow L.

Referring to Figs. 1 to 3, the tractor essentially includes an engine 1 (representing "device A") mounted forward of a vehicle body, a main clutch 2 (representing "device A") connected to a back side of the engine 1, a transmission unit 3 and a climb-in driver's section 4, both of which are provided rearward of the vehicle body, steerable right and left front wheels 5 driven by power from the engine 1, right and left rear wheels 6 driven by power from the engine 1, right and left fenders 7 covering the right and left rear wheels 6 from above, a protection frame 8 mounted rearward of the vehicle body in standing position, and a link mechanism 9 for attaching or detaching a work implement (not shown) such as a tiller to/from a rear part of the vehicle body.

The transmission unit 3 includes a transmission case 3A, which also acts as a rear frame of the vehicle body. The transmission case 3A typically includes, at a rear end thereof, a support frame 10 for supporting the protection frame 8, and a PTO shaft 11 (representing "device A" and "actuating section B") for outputting driving power to the work implement. The transmission case 3A includes, at an upper end thereof, a hydraulic lift device 12 (representing "device A" and "actuating section B") for vertically moving the work implement through the link mechanism 9.

The transmission unit 3 typically includes a propelling main transmission (representing "device A"), a propelling auxiliary transmission (representing "device A"), right and left side brakes for the rear wheels (representing "device A"), and a transmission for the PTO shaft (representing "device A"), all of which are not shown.

As illustrated in Figs. 1 to 3, the driver's section 4 essentially includes a driver's seat 13 mounted rearward of the vehicle body, a steering wheel 14 for steering the front wheels, an accelerator pedal 15 (representing "control element C") for manually regulating engine speed, a clutch pedal 16 (representing "control element C") for manually operating the main clutch, right and left side brake pedals 17 (representing "control element C") for manually operating the right and left side brakes, a main shift lever 18 (representing "control element C") for manually operating the main transmission, an auxiliary shift lever 19 (representing "control element C") for manually operating the auxiliary transmission, a PTO control lever 20 (representing "control element C") for manually operating the transmission for the PTO shaft, and a lift control lever 21 (representing "control element C") for manually operating the lift device.

The accelerator pedal 15 and the right and left side brake pedals 17 are mounted near the right foot of the driver residing at the driver's section 4. The clutch pedal 16 is mounted near the left foot of the driver residing at the driver's section 4. The main shift lever 18 and the lift control lever 21 are arranged at a right outer side of the driver's seat 13. The auxiliary shift lever 19 and the PTO control lever 20 are arranged at a left outer side of the driver's seat 13. The main shift lever 18 and the lift control lever 21 include a grip portion 18A and a grip portion 21A, respectively, which are located above the right fender 7 arranged at the right outer side of the driver's seat 13. The auxiliary shift lever 19 and the PTO control lever 20 include a grip portion 19A and a grip portion 20A, respectively, which are located above the left fender 7 arranged at the left outer side of the driver's seat 13.

Referring to Figs. 1 to 4, the tractor further includes a partition 24 that divides the entire region of the vehicle body into a driver's region 22 and a rear region 23. The partition 24 has a lateral width W2 smaller than a lateral width W1 between outer ends of the right and left fenders 7 and greater than a width of a backrest 13A of the driver's seat 13. The partition 24 is disposed rearward of the backrest 13A and forward of rear ends of the right and left fenders 7.

With the above arrangement, the partition 24 prevents foreign matter from entering the driver's region 22 from behind through space 25 defined laterally outward of the backrest 13A of the driver's seat 13 within the lateral width W1.

As illustrated in Figs. 1 to 3, the control element C such as the accelerator pedal 15 and the lift control lever 21 is arranged in the driver's region 22 defined forward of the partition 24.

Such an arrangement prevents foreign matter from entering the driver's region 22 from behind through the space 25 and interfering with the control element C.

The PTO shaft 11 and the lift device 12, which represent "device A," each function as "actuating section B" for actuating the work implement and are provided in the rear part of the vehicle body. The PTO control lever 20 and the lift control lever 21, which represent "control element C," each function as a work control element for manually operating the actuating section B.

The above arrangement prevents the arm of the operator who inspects the actuating section B or the work implement in the rear region 23, for example, from inadvertently entering the driver's region 22 through the space 25 and interfering with the PTO control lever 20 or the lift control lever 21.

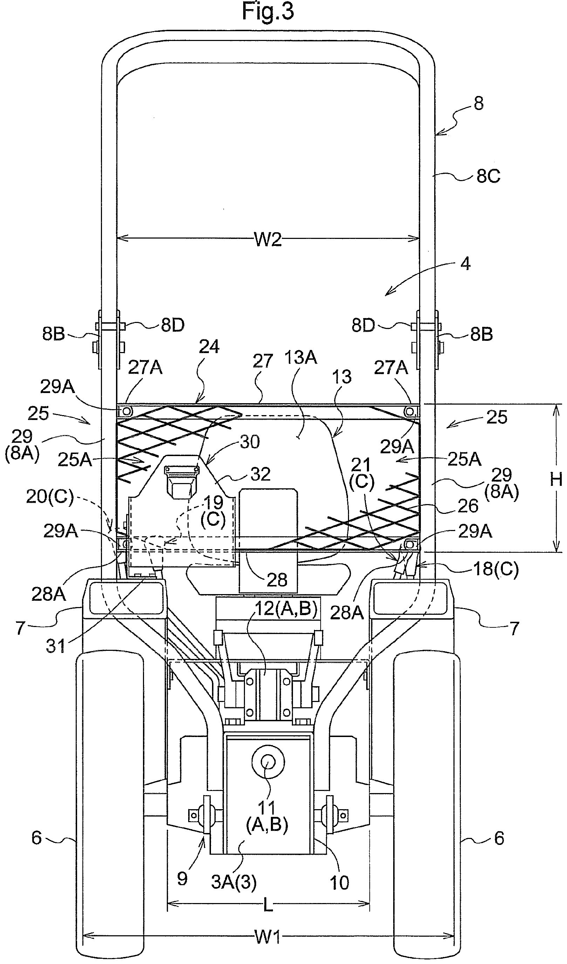

Referring to Figs. 2 and 3, the lateral width W2 of the partition 24 is greater than a distance L between inner ends of the right and left fenders 7.

With such an arrangement, it is more reliably prevented that foreign matter enters the driver's region 22 from behind through the space 25.

In particular, it is prevented more reliably that foreign matter enters the driver's region 22 from behind through the space 25 and interferes with the grip portions 18A to 21A of the levers 18 to 21 protruding above the right and left fenders 7.

As illustrated in Figs. 1, 3 and 4, the partition 24 has a vertical dimension H substantially corresponding to a vertical dimension of the backrest 13A of the driver's seat 13 between an upper part and a lower part thereof.

This arrangement prevents foreign matter from entering the driver's region 22 from behind through the space 25 in the range of the vertical dimension of the backrest 13A.

As understood from Figs. 3 to 5, the partition 24 is supported by the protection frame 8.

This arrangement provides a simplified structure with a reduced number of parts compared with a structure having an additional element exclusively used for supporting the partition 24.

Referring to Figs. 1 to 5, the partition 24 has an expanded metal material 26 (representing a "mesh screen") with transparency, as a principal component.

This arrangement assures the driver of good visibility of the rear side of the vehicle body even with the partition 24.

Additionally, the above arrangement provides air-permeability between the driver's region 22 and the rear region 23 of the vehicle body, which can avoid accumulation of hot air in the driver's region 22.

Further, the above arrangement reduces resistance applied on the partition 24 during travel of the vehicle, which is particularly advantageous when the vehicle travels a road at high speed.

Moreover, if mud or wet dirt splashes over the partition 24 during travel of the vehicle in operation, attachment of the mud to the partition 24 can be minimized. In a cold district, it is possible in snowfall to prevent snow from attaching or accumulating to the partition 24, which always ensures good visibility of the rear side of the vehicle body for the driver without his or her making any effort to remove mud or snow from the partition 24.

Referring to Figs. 2 to 5, the partition 24 has upper and lower reinforcement elements 27 and 28, which are made of steel plate. The upper reinforcement element 27 has a lateral width extending between lateral opposite ends of the expanded metal material 26 to reinforce an upper edge portion of the expanded metal material 26. The lower reinforcement material 28 also has a lateral width extending between lateral opposite ends of the expanded metal material 26 to reinforce a lower edge portion of the expanded metal material 26.

The above arrangement enhances shape retainability of the partition 24.

As illustrated in Figs. 3 to 5, the upper reinforcement element 27 and the lower reinforcement element 28 have lateral opposite ends 27A and lateral opposite ends 28A, respectively, which also function as connecting parts to bolt-connect the partition 24 to the protection frame 8.

This arrangement provides a simplified structure with a reduced number of parts compared with a structure having additional connecting elements exclusively used for connecting the partition 24 to the protection frame 8.

Referring to Figs. 1 to 5, the protection frame 8 has a lower frame component 8A fixed to the vehicle body in standing position, and an upper frame component 8C connected to upper parts of the lower frame component 8A to be vertically pivotable via hinges 8B.

As a result, the protection frame 8 is switchable in use between a first position in which the upper frame component 8C is located above the lower frame component 8A, and a second position in which the upper frame component 8C is located rearward of the lower frame component 8A.

Consequently, when using the tractor in an orchard, for example, the driver may bring the protection frame 8 to the second position to reduce the chances that the upper frame component 8C disadvantageously easily interferes with braches of fruit trees during travel of the tractor.

The partition 24 is provided at a position lower than the right and left hinges 8B.

The above arrangement prevents foreign matter from entering the driver's region 22 from behind through the space 25 regardless whether the protection frame 8 is in the first position or the second position in use.

The lower frame component 8A has right and left posts 29 extending upward from lateral sides of the support frame 10. The upper frame component 8C is bent to have an inversed U-shape as viewed from the front or the rear having a lateral width extending between the right and left posts 29. Each of the right and left posts 29 has a lower part extending upward and laterally outward from the lateral side of the support frame 10 to a rear part of the right or left fender 7. Each of the right and left posts 29 has an upper part extending upward from the right or left fender 7 through an opening 7A formed in the rear part of the right or left fender 7.

The protection frame 8 also has each of the right and left hinges 8B provided between an upper end of the right or left post 29 and an end of the upper frame component 8C. The protection frame 8 also has right and left lock pins 8D each attachable to different positons of the right or left hinge 8B. In the first position of the protection frame 8, each of the lock pins 8D is attached to a first mounting position of each of the hinges 8B to fix and hold the protection frame 8 in the first position. Likewise, in the second position of the protection frame 8, each of the lock pins 8D is attached to a second mounting position of each of the hinges 8B to fix and hold the protection frame 8 in the second position.

The right and left posts 29 each have connecting elements 29A at an upper part and a lower part thereof to bolt-connect the partition 24 to the right or left posts 29.

Referring to Figs. 3 to 5, the lateral opposite ends 27A and 28B of the upper and lower reinforcement elements 27 and 28 are bolt connected to the corresponding connecting elements 29A of the right and left posts 29, in which four corners of the expanded metal material 26 forming the partition 24 coincide with the positions of the connecting elements 29A of the right and left posts 29 in a front-back direction of the vehicle body.

As a result, the partition 24 protrudes less from the connecting elements 29A in the front-back direction with the partition 24 being attached to the right and left posts 29, compared with an arrangement in which the four corners of the expanded metal material 26 do not coincide with the positions of the connecting parts 29A of the right and left posts 29 in the front-back direction when the lateral opposite ends 27A and 28B of the upper and lower reinforcement elements 27 and 28 are bolt connected to the corresponding connecting elements 29A of the right and left posts 29.

The expanded metal material 26 is chamfered at the four corners to avoid contact with the connecting elements 29A near the protection frame and has a substantial rectangular shape as viewed from the front or the rear.

This arrangement allows the lateral opposite edge portions of the expanded metal material 26 to come into contact with or approximately come into contact with the right and left posts 29 while the partition 24 less protrudes from the connecting elements 29A in the front-back direction when attached to the right and left posts 29 (see Fig. 3).

As understood from Figs. 2 and 3, the protection frame 8 is arranged so that the right and left posts 29 are positioned laterally outward of lateral opposite ends of the backrest 13A of the driver's seat 13 above the right and left fenders 7. The lateral width W2 of the partition 24 is dimensioned to extend between the right and left posts 29, for example, so that the partition 24 does not protrude from lateral outer ends of the right and left posts 29.

This arrangement reliably prevents foreign matter from entering the driver's region 22 from behind through narrower space 25A than the space 25, which expands between the backrest 13A and the right and left posts 29.

Referring to Figs. 1, 4 and 5, the partition 24 is arranged within a front-back width W3 of each of the right and left posts 29.

With such an arrangement, the right and left posts 29 conceal lateral outer edge portions of the partition 24, which prevents foreign matter from interfering with edges of the lateral outer edge portions of the partition 24 without providing any additional element exclusively used for guarding the edges.

Referring to Figs. 1 and 3 to 5, the tractor further includes a license 30 to which a license plate (not shown) is attached. The license plate holder 30 is provided reward of the partition 24.

With this arrangement, it is prevented that the visibility from behind of the license plate attached to the back of the license plate holder 30 is disadvantageously obstructed by the partition 24.

The license plate holder 30 is mounted between the right and left posts 29 and within the front-back width W3 of the right and left posts 29.

With this arrangement, the right and left posts 29 conceal lateral outer edge portions of the license plate holder 30, which prevents foreign matter from interfering with edges of the lateral outer edge portions of the license plate holder 30 without providing any additional element exclusively used for guarding the edges.

The license plate holder 30 has a connecting element 31 connected to the left fender 7, and a support element 32 supporting the license plate. The connecting element 31 has an L-shape as viewed from the side with a recess 31A formed in an upper front part thereof. The partition 24 has a left lower end portion entering the recess 31A of the connecting element 31.

This arrangement allows the partition 24 and the license plate holder 30 to be arranged within the front-back width W3 of the right and left posts 29 without unnecessarily increasing the front-back width W3.

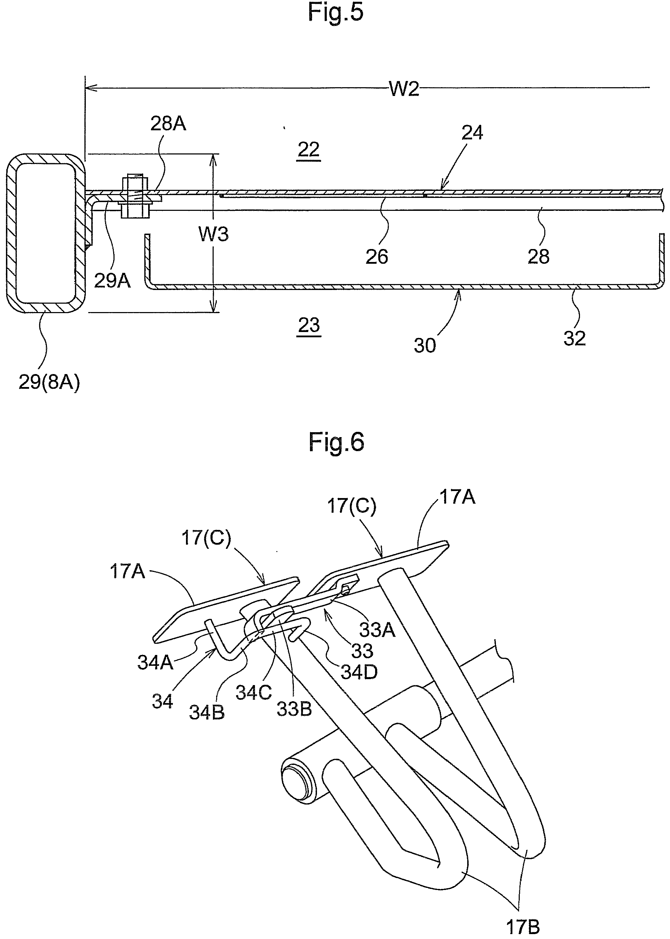

As illustrated in Fig. 6, each of the right and left side brake pedals 17 is urged to return to a depression release position via a spring (not shown). A connecting unit 33 is provided to connect the right and left side brake pedals 17 to each other to be pivotable in unison. The connecting unit 33 has a swing piece 33A that is provided in the left side brake pedal 17 mounted inward of the vehicle body to be laterally pivotable, and a fixed piece 33B that is fixed to the right side brake pedal 17 mounted outward of the vehicle body. The connecting unit 33 allows the right and left brake pedals 17 to be pivotable together with the swing piece 33A being manually operated to a right connecting position to engage with the fixed piece 33B. On the other hand, the connecting unit 33 allows the right and left brake pedals 17 to be pivotable independently of each other with the swing piece 33A being manually operated to a left releasing position to disengage from the fixed piece 33B.

The right side brake 17 has a guard element 34 for preventing foreign matter from interfering with edges of a right exposed edge portion of the connecting unit 33. The guard element 34 is angled and made of round-bar steel having a first extension 34A extending perpendicularly from a back surface of a depression part 17A of the right side brake pedal 17, a second extension 34B bent at a right angle at an extending end of the first extension 34A to extend forward of the vehicle body, a third extension 34C bent at a right angle at an extending end of the second extension 34B to extend leftward of the vehicle body, and a fourth extension 34D bent at a right angle at an extending end of the third extension 34C to extend perpendicularly to a right arm 17B associated with the right side brake pedal 17. The first extension 34A and the second extension 34B are positioned rightward of the vehicle body, extending beyond a right end of the swing piece 33A located in the right connecting position and a right end of the fixed piece 33B. The second, third and fourth extensions 34B, 34C and 34D are positioned forward of the vehicle body, extending beyond a front end of the swing piece 33A located in the right connecting position and a front end of the fixed piece 33B. The third extension 34C is positioned upward of the vehicle body, extending beyond an upper end of the swing piece 33A located in the right connecting position and an upper end of the fixed piece 33B.

With this arrangement, the guard element 34 prevents foreign matter from interfering with the edges of the right exposed edge portion of the connecting unit 33.

Although not shown, the right and left side brake pedals 17 are each provided with a rubber nonskid material to cover front surfaces and peripheral edge portions of the pedals.

### [Modifications of First Embodiment]

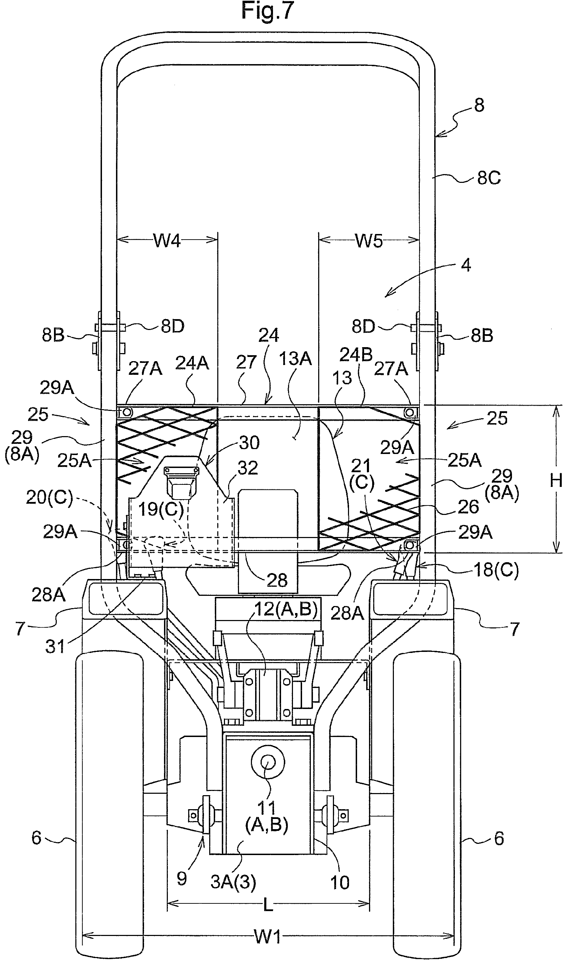

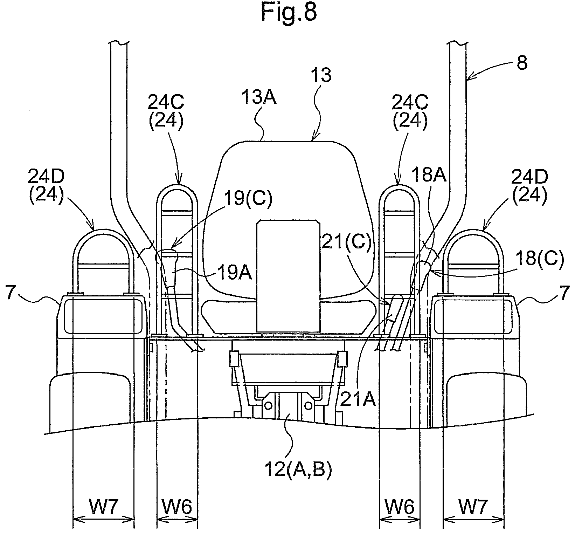

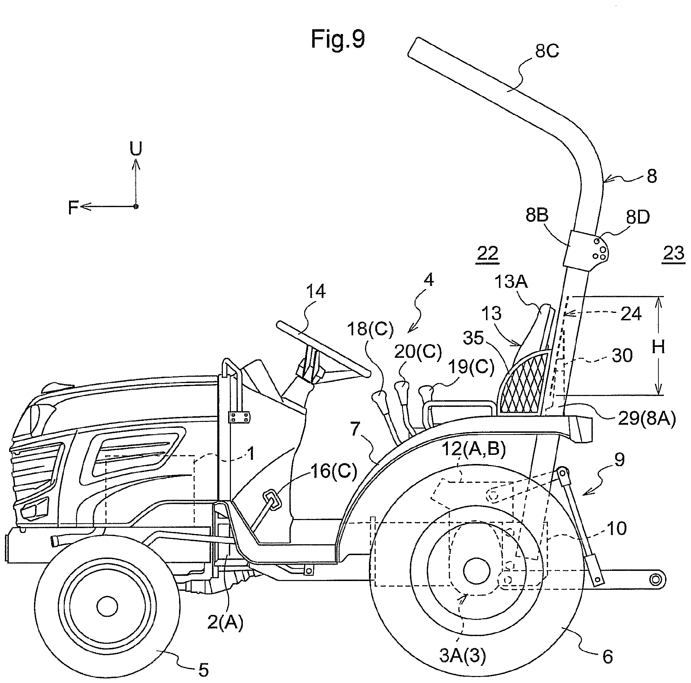

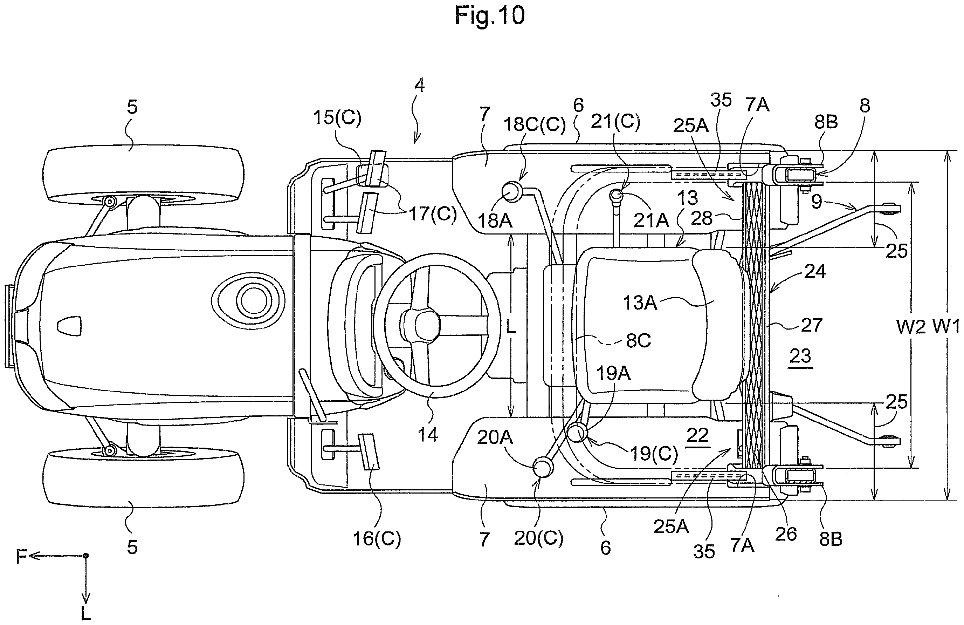

[1] The vertical dimension H of the partition 24 may be altered in various ways if such variations also prevent foreign matter from entering the driver's region 22 from behind through the space 25.
   For example, the partition 24 may have a vertical dimension H corresponding to a vertical dimension extending from an upper part of the backrest 13A of the driver's sat 13 to top surfaces of the right and left fenders 7.
   Alternatively, the partition 24 may have a vertical dimension H corresponding to a vertical dimension extending from vicinity of a lower part of the right and left hinges 8B of the protection frame 8 to the top surfaces of the right and left fenders 7.
[2] The lateral width W2 of the partition 24 may be altered in various ways if such variations also prevent foreign matter from entering the driver's region 22 from behind through the space 25.
   For example, the partition 24 may have a lateral width W2 that is substantially the same as the lateral width W1 between the outer ends of the right and left fenders 7.
   Alternatively, the partition 24 may have a lateral width W2 that is the same as a lateral dimension between outer ends of the right and left posts 29 of the protection frame 8.
   Alternatively, the partition 24 may have a lateral width W2 that is slightly smaller than a lateral dimension between inner ends of the right and left posts 29 of the protection frame 8.
[3] As illustrated in Fig. 7, the partition 24 may be formed of a left wall part 24A having a lateral width W4 extending between the left post 29 and the backrest 13A of the driver's seat 13, and a right wall part 24B having a lateral width W5 extending between the right post 29 and the backrest 13A of the driver's seat 13.
   Such an arrangement achieves a lightweight vehicle body compared with an arrangement with the partition 24 including a wall part (principal component 26) having a width extending between the right and left posts 29.
[4] As illustrated in Fig. 8, the partition 24 may be formed as a pair of right and left inner side partitions 24C provided in lateral sides of the backrest 13A of the driver's seat 13, each of the inner side partitions having a lateral width W6 that extends from vicinity of the backrest 13A to the right or left post 29 of the protection frame 8.
   With such an arrangement, the right and left inner side partitions 24C prevent foreign matter from entering the driver's region 22 from behind through space defined between the backrest 13A of the driver's seat 13 and the right or left post 29.
[5] As illustrated in Fig. 8, the partition 24 may be formed as a pair of right and left outer side partitions 24D provided in lateral sides of the right and left posts 29 of the protection frame 8, each of the outer side partitions having a lateral width W7 that extends from vicinity of the right or left post 29 of the protection frame 8 to the outer end of the right or left fender 7.
   With such an arrangement, the right and left outer side partitions 24D prevent foreign matter from entering the driver's region 22 from behind through space defined between the right or left post 29 and the outer end of the right or left fender 7.
[6] The partition 24 may include either one or both of the inner side partitions 24C and the outer side partitions 24D as shown in Fig. 8.
   If the partition 24 includes both, inner and outer, partitions 24C, 24D, then the right and left inner side partitions 24C prevent foreign matter from entering the driver's region 22 from behind through the space defined between the backrest 13A of the driver's seat 13 and the right or left post 29. Additionally, the right and left outer side partitions 24D prevent foreign matter from entering the driver's region 22 from behind through the space defined between the right or left post 29 and the outer end of the right or left fender 7.
[7] As illustrated in Fig. 9, the partition 24 may have a vertical dimension H that is greater than vertical dimensions of the grip portions of the levers protruding above the right and left fenders 7, including the grip portion 18A of the main shift lever 18, the grip portion 19A of the auxiliary shift lever 19, the grip portion 20A of the PTO control lever 20, and the grip portion 21A of the lift control lever 21, and may be provided at such a level as covering or concealing these grip portions 18A, 19A, 20A and 21A.
   With such an arrangement, it is prevented more reliably that foreign matter enters the driver's region 22 from behind through the space 25 and interferes with the grip portion 18A of the main shift lever 18, for example, protruding above the right or left fender 7.
[8] As understood from Fig. 8, the partition 24 may have a fence shape.
[9] The partition 24 may be mounted rearward of the right and left posts 29 of the protection frame 8. Further, the partition 24 may be mounted between the backrest 13A of the driver's seat 13 and the right or left post 29.
[10] The partition 24 may include a lower wall part supported by the lower frame component 8A of the protection frame 8, and an upper wall part supported by the upper frame component 8C of the protection frame 8.
[11] The partition 24 may include a perforated metal material or a wire mesh (each representing a "mesh screen") having transparency and air-permeability, for example, as the principal component 26 instead of the expanded metal material 26 in the foregoing embodiment.
[12] The partition 24 may include an acrylic resin plate having transparency for example, representing the principal component 26.
[13] The principal component 26 of the partition 24 may be connected to the protection frame 8 or to the right and left fenders 7.
[14] The partition 24 may dispense with the upper and lower reinforcement elements 27 and 28.
[15] The partition 24 may be supported by the right and left fenders 7. An additional element exclusively used for supporting the partition 24 may be provided.
[16] The tractor may include a forward drive/reverse drive switching device or a front-wheel transmission, which represents "device A," and may have a forward drive/reverse drive switching lever or a front-wheel shift lever, which represents "control element C."
[17] The tractor may include a control switch or a rotatable potentiometer, for example, which represents "control element C."
[18] The tractor may including a rolling device representing "actuating section B" for rolling and driving the work implement, and an angle setting device representing "control element C" for setting a rolling angle of the work implement.
[19] The control element C may be disposed between the backrest 13A of the driver's seat 13 and the right or left fender 7.
[20] In the protection frame 8, the upper frame component 8C may be un-pivotably fixed to the upper part of the lower frame component 8A. The upper frame component 8C may be detachably connected to the upper parts of the lower frame component 8A.
[21] Referring to Figs. 9 and 10, right and left auxiliary partitions 35 may be provided in addition to the partition 24. Each of the auxiliary partitions 35 extends forward of the vehicle body starting from the right or left lateral end of the partition 24.
   With such an arrangement, the right and left auxiliary partitions 35 prevent foreign matter from entering a region forward of the partition 24 from behind through a lateral outer side of the partition 24.
   In particular, it is prevented that the operator, who inspects the actuating section B in the rear region 23, the actuating section B disposed laterally of the work implement, or the work implement, inadvertently puts his or her arm into the driver's region 22 through the lateral outer side of the partition 24.
   The right and left auxiliary partitions 35 shown in Figs. 9 and 10 are supported by the right and left fenders 7 and the protection frame 8. Instead, the right and left auxiliary partitions 35 may be supported by the right and left fenders 7 and the partition 24.
   Similarly to the partition 24 described in the first embodiment, the right and left auxiliary partitions 35 shown in Figs. 9 and 10 has an expanded metal material 26 (representing a "mesh screen") with transparency, as a principal component. The principal component forming the right and left auxiliary partitions 35 may be altered in various ways, similarly to the partition 24.
[22] In the arrangement including the right and left auxiliary partitions 35, each of the partitions 35 may have a vertical dimension H that is greater than vertical dimensions of the grip portions of the levers representing "control element C" mounted laterally outward of the driver's seat 13, including the grip portion 18A of the main shift lever 18, the grip portion 19A of the auxiliary shift lever 19, the grip portion 20A of the PTO control lever 20, and the grip portion 21A of the lift control lever 21, and may be provided at such a level as covering or concealing these grip portions 18A, 19A, 20A and 21A.
   With such an arrangement, the right and left auxiliary partitions 35 prevent foreign matter from entering the region forward of the partition 24 from behind through the lateral outer side of the partition 24 and interfering with the grip portion 20A of the PTO control lever 20 or the grip portion 21A of the lift control lever 21, for example.
   In particular, it is prevented that the arm of the operator, who inspects the actuating section B in the rear region 23, the actuating section B disposed laterally of the work implement, or the work implement, inadvertently enters the driver's region 22 through the lateral outer side of the partition 24 and interfers with the grip portion 20A of the PTO control lever 20 or the grip portion 21A of the lift control lever 21.
[23] In the arrangement including the right and left auxiliary partitions 35, each of the partitions 35 may have a vertical dimension H so that an upper end of each of the auxiliary partitions 35 is at the same level or substantially the same level as an upper end of the partition 34.
   With such an arrangement, the right and left auxiliary partitions 35 more reliably prevent foreign matter from entering the region forward of the partition 24 from behind through the lateral outer side of the partition 24 and interfering with the grip portion 20A of the PTO control lever 20 or the grip portion 21A of the lift control lever 21, for example.
   In particular, it is prevented more reliably that the arm of the operator, who inspects the actuating section B in the rear region 23, the actuating section B disposed laterally of the work implement, or the work implement, inadvertently enters the driver's region 22 through the lateral outer side of the partition 24 and interferes with the grip portion 20A of the PTO control lever 20 or the grip portion 21A of the lift control lever 21.
[24] In the arrangement including the right and left auxiliary partitions 35, how degree the auxiliary partitions 35 should extend forward may be determined in various ways depending on the arrangement of the control element C.

### [Second Embodiment]

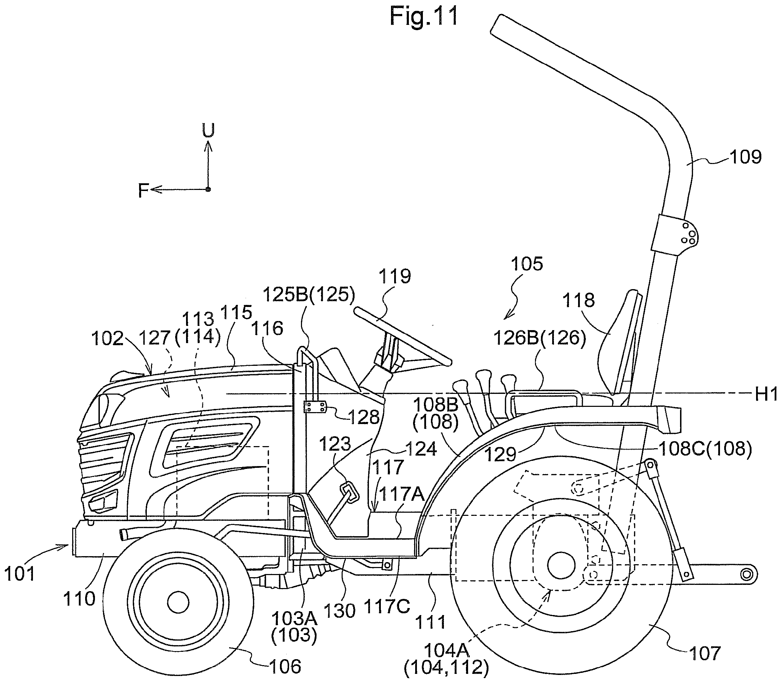

A tractor, an example of work vehicles, according to a second embodiment of the present invention will be described hereinafter in detail in reference to Figs. 11 to 20.
In Fig. 11, a front side of the tractor is indicated with an arrow F, and an upper side of the tractor is indicated with an arrow U.

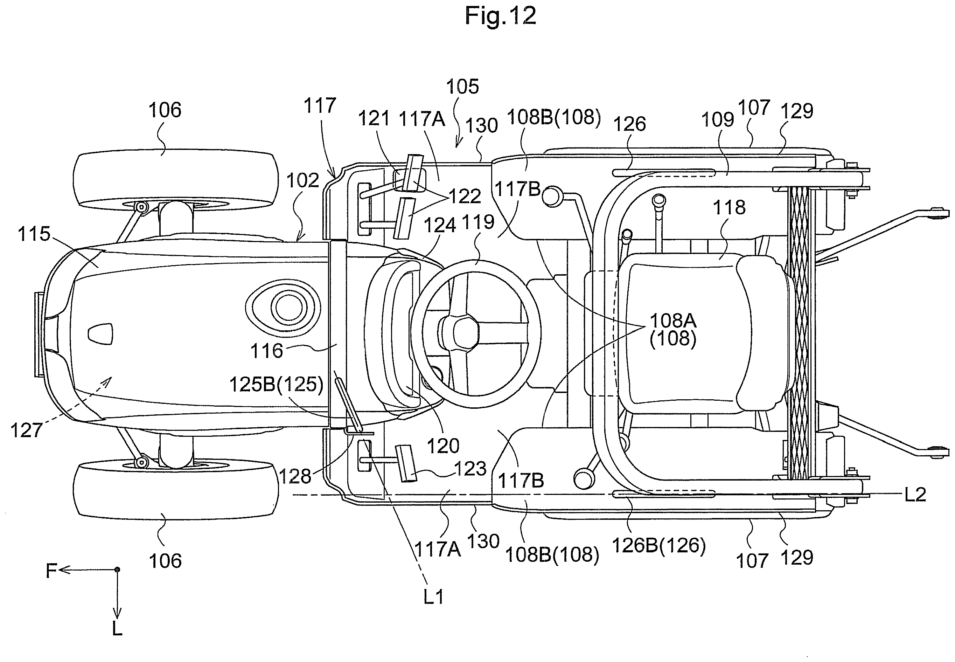

In Fig. 12, the front side of the tractor is indicated with the arrow F, and a left side of the tractor is indicated with an arrow L.

Referring to Figs. 11 and 12, the tractor essentially includes a vehicle frame assembly 101 forming a framework of a vehicle body, a motor section 102 mounted forward of the vehicle body, a main clutch 103 connected to a back side of the motor section 102, a transmission unit 104 and a climb-in driver's section 105, both of which are mounted rearward of the vehicle body, steerable right and left front wheels 106 driven by power from the motor section 102, right and left rear wheels 107 (representing "rear propelling devices") driven by power from the motor section 102, right and left fenders 108 covering the right and left rear wheels 107 from above, and a protection frame 109 connected to a rear end of the vehicle body.

As illustrated in Fig. 11, the vehicle frame assembly 101 typically includes a front frame 110 for mainly supporting the motor section 102, an intermediate frame 111 for mainly supporting a front part of the driver's section 105, and a rear frame 112 for mainly supporting a rear part of the driver's section 105. The main clutch 103 has a clutch housing 103A forming part of the vehicle frame assembly 101. The transmission unit 104 has a casing 104A forming the rear frame 112 of the vehicle frame assembly 101.

Referring to Figs. 11 to 13, the motor section 102 typically includes a motor unit 114 having an engine 113 and its peripheral devices (not shown), a pivotably opening and closing hood 115 for mainly covering the motor unit 114, and a central pillar 116 (representing "frame element") for supporting the hood 115 to be vertically pivotable between an open position and a closed position.

The motor section 102 further includes a radiator, an air cleaner, and a muffler, all of which are not shown, acting as the peripheral devices of the engine 113. The casing 104A of the transmission unit 104 typically accommodates a main transmission, an auxiliary transmission, a differential for the rear wheels, and right and left side brakes for the rear wheels, all of which are not shown.

As illustrated in Figs. 11 to 13, the driver's section 105 typically includes a driving platform 117 supported by the intermediate frame 11, a driver's seat 118 supported by the rear frame 112, a steering wheel 119 for steering the front wheels, a display panel 120 for mainly indicating engine speed, an accelerator pedal 121 operatively connected to an engine speed regulation lever (not shown), right and left side brake pedals 122 operatively connected to the right and left side brakes, a clutch pedal 123 operatively connected to the main clutch, and a cover panel 124 for mainly covering a steering shaft (not shown) rotatable in unison with the steering wheel 119 from behind.

The driving platform 117 includes a boarding section 117A from which the driver steps into the driving platform 117, the boarding sections being provided on lateral opposite sides outward of the steering wheel 119 and forward of the right and left fenders 108 as viewed from the top. The driving platform 117 also includes a passage section 117B through which the driver moves between the boarding sections 117A and the driver's seat 118, the passage sections being provided between the steering wheel 119 and the right and left fenders 108 mounted on lateral opposite sides of the driver's seat 118 as viewed from the top. The passage section 117B extends diagonally rearward of the vehicle body to the driver's seat 118 toward a center of the vehicle body as viewed from the top. The driver's seat 18 is mounted between the right and left rear wheels 107 at a position rearward of the driving platform as viewed from the top. The steering wheel 119 is mounted forward of the driver's seat 118 with residing space for the driver being secured therebetween. The display panel 120 is mounted forward and downward from the steering wheel 119. The accelerator pedal 121 and the right and left side brake pedals 122 are mounted near the right foot of the driver residing at the driver's section 105. The clutch pedal 123 is mounted near the left foot of the driver residing at the driver's section 105. The cover panel 124 is positioned below the steering wheel 119 and is supported by the central pillar 116, for example.

The driver's section 105 has access space for allowing movement of the driver. The access space is defined between the steering wheel 119 and the cover panel 124, which are arranged on the lateral center of the vehicle body, and the right and left fenders 108 which are arranged on lateral opposite ends of the vehicle body.

With the driver's section 105 having the above arrangement, the driver may access or leave the driver's section 105 from the left boarding section 117A more easily than from the right boarding section 117A because the left boarding section 117A has a fewer number of pedals.

The tractor further includes a first handrail 125 mounted forward of the left boarding section 117A. The driver can grip the first handrail 125 with his or her one hand closer to the front side of the vehicle body, when accessing or leaving the driver's section 105 from the left boarding section 117A. The tractor also includes right and left second handrails 126 mounted rearward of the right and left boarding sections 117A. The driver can grip either one of the two second handrails 126 with the other hand, i.e. his or her hand closer to the rear side of the vehicle body, when accessing or leaving the driver's section 105 from the right or left boarding section 117A.

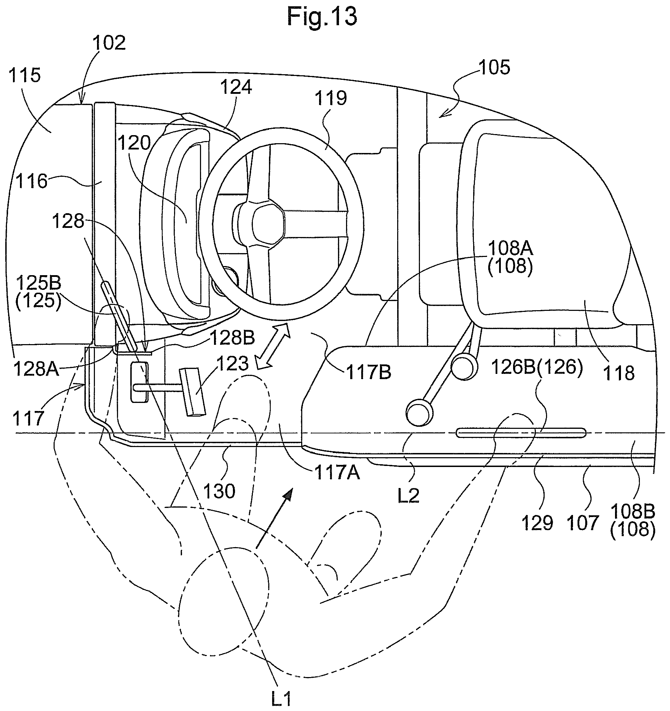

With the above arrangement, the driver may grip the first handrail 125 with his or her hand near the front side of the vehicle body and grip the left second handrail 126 with the other hand near the rear side of the vehicle body when accessing or leaving the driver's section 105 from the left boarding section 117A. This allows the driver to access or leave the driver's section 105 from the left boarding section 117A stably and safely with a three-point support established by a foot stepping on the left boarding section 117A, one hand gripping the first handrail 125 on the left front side of the vehicle body, and the other hand gripping the second handrail 126 on the left rear side of the vehicle body (see Fig. 13) .

As a result, the driver can comfortably access or leave the driver's section 105 easily from the left boarding section 117A.

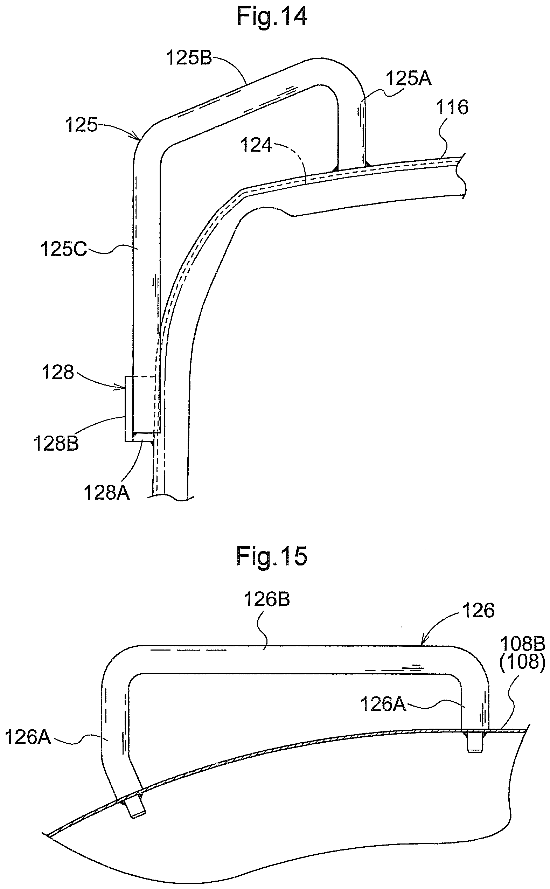

As understood from Fig. 14, the first handrail 125 is angled and made of round-bar steel having an upward extension 125A extending upward from the vehicle body, a lateral extension 125B extending outward and leftward from an upper end of the upward extension 125A, and a downward extension 125C extending downward straight from a left end of the lateral extension 125B. The lateral extension 125B of the first handrail 125 acts as a grip.

As understood from Fig. 13, the first handrail 125 is arranged so that the grip 125B has a left end protruding outward and leftward from a left outer side surface of the cover panel 124.

With such an arrangement, the driver may easily grip the first handrail 125 with his or her hand near the front side of the vehicle body when accessing or leaving the driver's section 105 from the left boarding section 117A compared with an arrangement of the grip 125B with its left end positioned more inward of the vehicle body, i.e., near the lateral center of the vehicle body, from the left outer side surface of the cover panel 124, for example.

As a result, the driver can more easily access or leave the driver's section 105 from the left boarding section 117A.

As understood from Fig. 15, each of the right and left second handrails 126 is angled and made of round-bar steel having front and rear upward extensions 126A, and a front-back extension 126B extending between upper ends of the front and rear upward extensions 126A. The front-back extension 126B of each of the right and left second handrails 126 acts as a grip.

As understood from Fig. 13, the right and left second handrails 126 are arranged so that the grips 126B extend in the front-back direction of the vehicle body as viewed from the top.

With the above arrangement, the driver may grip either one of the second handrails 126 with his or her hand near the rear of the vehicle when moving through either of the right and left passage sections 117B. This allows the driver to move from either side of the boarding sections 117A to the driver's seat 118 through the corresponding passage section stably and safely, gripping the corresponding second handrail 126 with his or hand near the rear side of the vehicle body.

As a result, the driver can easily and smoothly move to the driver's seat 118 through the passage section either from the right or left boarding section 117A.

As illustrated in Fig. 14, the first handrail 125 is arranged so that the grip 125B extends diagonally in a rear and left direction of the vehicle body at a left outer side position of a rotation center of the steering wheel 19 as viewed from the top.

With the above arrangement, a left outer side portion of the grip 125B is positioned close to the left second handrail 126 compared with an arrangement having the grip 125B extending along a lateral direction of the vehicle body. This allows the driver to easily grip the first handrail and the left second handrail with his or her both hands when accessing or leaving the driver's section 105 from the left boarding section 117A.

Additionally, when climbing into the driver's section 105 from the left boarding section 117A, the driver can easily turn the front of his or her body toward the access space defined above the left passage section extending diagonally rearward of the vehicle body to the driver's seat 118 toward the center of the vehicle body as viewed from the top.

Further, when the driver moves along the left passage section 117B to get off the tractor from the left boarding section 117A, the front of the driver's body turns to the access space above the left passage section. In this state, the grip 125B of the first handrail 125 extends from the vehicle body toward the driver's hand near the front side of the vehicle body. This allows the driver to easily hold the grip 125B of the first handrail 125 with his or her hand near the front side of the vehicle body when getting off the tractor from the left boarding section 117A.

As a result, the driver can more easily access or leave the driver's section 105 from the left boarding section 117A.

The display panel 120 has a curved shape having a front part thereof bulged forward as viewed from the top. The first handrail 125 is mounted forward of the display panel 120. The grip 125B of the first handrail 125 extends diagonally leftward and rearward along a curved left side portion of the front part of the display panel 120 (along a curved portion of the front side of the display panel 120 remote from the driver's seat 118) as viewed from the top, at the same level as the display panel 120.

With the above arrangement which avoids excessively narrowing some part of a gap defined between the grip 125B of the first handrail 125 and the display panel 120 over the entire length of the grip 125b, the left end of the grip 125B of the first handrail 125 can be positioned close to the left second handrail 126, and yet the driver is not obstructed by the display panel 120 when attempting to hold the grip 125B of the first handrail 125 with his or her hand near the front side of the vehicle body.

As a result, the driver can more easily hold the grip 125B of the first handrail 125 with his or her hand near the front side of the vehicle body when accessing or leaving the driver's section 105 from the left boarding section 117A.

Referring to Figs. 11 and 14, the grip 125B of the first handrail 125 slants downward and leftward.

With this arrangement, the driver can easily hold the grip 125B of the first handrail 125 with his or hand near the front side of the vehicle body when climbing into the driver's section 105 from the left boarding section 117B as compared with an arrangement having the grip 125B of the first handrail 125 extending leftward at a constant level, for example, because the driver's wrist is brought to an uncomfortable or unnatural position less easily. This allows the driver to easily climb into the driver's section 105 holding the grip 125B of the first handrail 125.

As a result, the driver can more easily access or leave the driver's section 105 from the left boarding section 117A.

As understood from Figs. 12 and 13, the grip 125B of the first handrail 125 is arranged closer to the lateral center of the vehicle body than the grip 126B of the left second handrail 126 as viewed from the top so that a first center extension line L1 extending rearward and leftward from the grip 125B of the first handrail 125 intersects a second center extension line L2 extending forward from the grip 126B of the left second handrail 126 above the left boarding section 17A.

With such an arrangement, when climbing into the driver's section 105 from the left boarding section 117A, the driver holds the grip 125B of the first handrail 125 arranged closer to the lateral center of the vehicle body with his or her hand near the front side of the vehicle body and holds the grip 126B of the second handrail 126, which is positioned at an outer left end of the vehicle body, with the other hand near the rear side of the vehicle body to easily turn the front of his or her body toward the access space above the left passage section.

On the other hand, when moving along the left passage section 117B to get off the tractor from the left boarding section 117A, the driver turns the front of his or her body toward the access space above the left passage section. In this state, the grip 125B of the first handrail 125 is positioned closer to the lateral center of the vehicle body, which is adjacent to one of the driver's hands near the front side of the vehicle body, and the grip 126B of the second handrail 126 is positioned at the outer left end of the vehicle body, which is adjacent to the other of the driver's hands near the rear side of the vehicle body. With such an arrangement, when getting off the tractor from the left boarding section 117A, the driver easily holds the grip 125B of the first handrail 125 with his or hand near the front side of the vehicle body and the grip 126B of the left second handrail 126 with the other hand near the rear side of the vehicle body.

As a result, the driver can more easily access or leave the driver's section 105 from the left boarding section 117A.

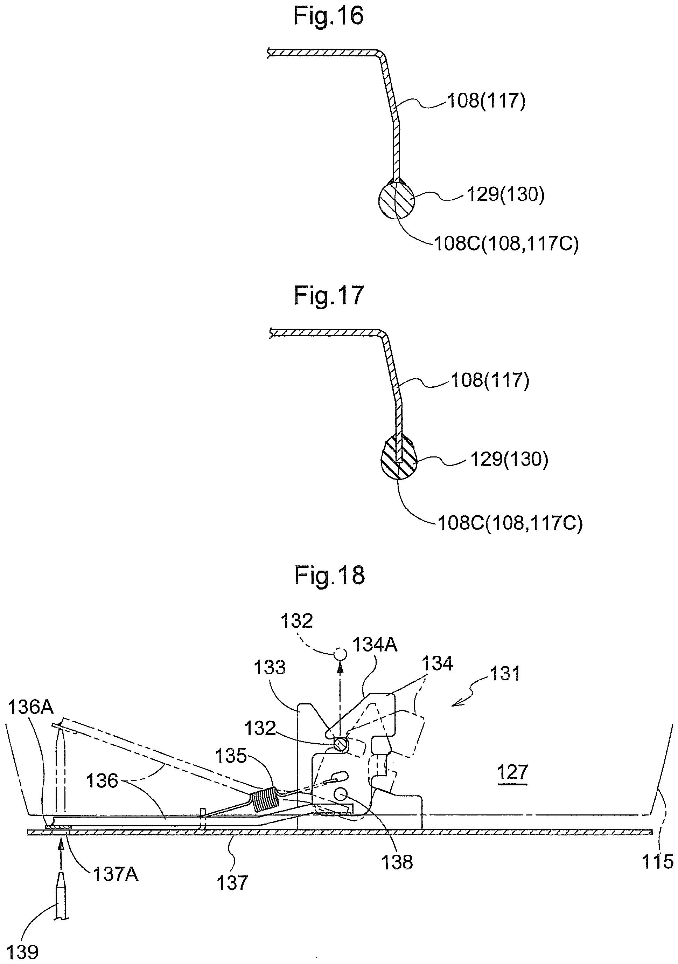

As seen from Fig. 13, the first handrail 125 is supported by the central pillar 116 mounted upright on the vehicle frame assembly 101 between an engine compartment 127 (Fig. 18) provided forward of the vehicle body, and the steering wheel 119.

With the above arrangement, the first handrail 125 is firmly supported by the central pillar 116, which inherently has increased strength to support heavy components such as the hood 115. This provides the first handrail 125 with great supporting strength to bear a pulling force applied on the first handrail 125 when the driver climbs into the driver's section 105 and a pushing force applied on the first handrail 125 when the driver leaves the driver's section 105.

As a result, such an arrangement easily achieves sufficient, increased supporting strength for the first handrail 125 without providing any additional support element or reinforcement element exclusively used for the first handrail.

The engine compartment 127 is defined by the hood 115 in the closed position. The motor unit 114 is mounted in the engine compartment 127, for example.

The central pillar 116 has an inversed U-shape, which coincides with a shape of a rear end part of the hood 115, as viewed from the front or the rear. The central pillar 116 is made of a steel plate pressed into the U-shape in section to have increased strength per se for supporting the hood 115, for example.

The central pillar 116 has opposite lower lateral ends connected to the clutch housing 103A to extend upward from the clutch housing 103A between the hood 115 and the cover panel 124.

The central pillar 116 includes a support element 128 connected to a left side thereof and having an L-shape as viewed from the top. The support element 128 has a lateral extension 128A extending outward and leftward from the left side of the central pillar 116, and a rearward extension 128B extending rearward from a left end of the lateral extension 128A. The first handrail 125 is connected at a lower end of the upward extension 125A to a left upper part of the central pillar, and at a lower end of the downward extension 125C to the rearward extension 128B of the support element 128.

With such an arrangement, the first handrail 125 is attached to the vehicle body with the grip 125B of the first handrail 125 slanting rearward and leftward using the central pillar 116 having increased strength.

The support element 128 is welded to the central pillar 116, and the first handrail 125 is welded to the central pillar 116 and to the support element 128.

As illustrated in Figs. 11 and 12, each of the right and left fenders 108 is made of a pressed steel plate having a side wall 108A facing an inner side face of an upper part of each of the right and left rear wheels 107, and a top plate 108B curving along an upper circumferential surface of each of the right and left rear wheels 107, and thus has increased strength per se. The side wall 108A of each of the right and left fenders 108 is connected to the vehicle frame assembly 101.

As understood from Fig. 11, the grip 126B in each of the right and left second handrails 126 is positioned at a level HI lower than that of the grip 125B of the first handrail 125.

With such an arrangement, when climbing into the driver's section 105 from the left boarding section 117A, the driver can easily pulls up his or her body by holding the grip 125B of the first handrail 125 positioned at a higher level with his or her hand near the front side of the vehicle, and easily push up his or her body by holding the grip 126B of the left second handrail 126 positioned at a lower level with the other hand near the rear side of the vehicle. Thus, the driver can easily access the driver's section 105 from the left boarding section 117A.

Also, when leaving the driver's section 105 from the left boarding section 117A, the driver can easily support his or her body moving downward by holding the grip 125B of the first handrail 125 positioned at the higher level with his or her hand near the front side of the vehicle, and holding the grip 126B of the left second handrail 126 positioned at the lower level with the other hand near the rear side of the vehicle. Thus, the driver can easily leave the driver's section 105 from the left boarding section 117A.

As illustrated in Figs. 11 to 13 and 15, the right and left second handrails 126 are positioned above and supported by the right and left fenders 108.

This arrangement provides a simplified structure with a reduced number of parts compared with a structure having additional elements exclusively used for supporting the second handrails.

Further, the right and left second handrails 126 are firmly supported by the right and left fenders 108 with increased strength as mentioned above. This arrangement easily provides the right and left second handrails 126 with great supporting strength, when the driver accesses or leaves the driver's section 105 from either one of the boarding sections 117A, to bear a pulling force or a pushing force applied on the corresponding second handrail 126.

As a result, such an arrangement easily achieves sufficient, increased supporting strength for the right and left second handrails 126 without providing any additional support elements or reinforcement elements exclusively used for the second handrails.

As understood from Fig. 15, the front and rear upward extensions 126A in each of the right and left second handrails 126 are welded at their lower ends to the top plate 108B of the right or left fender 108.

Essentially, referring to Figs. 11 to 14, the tractor includes the driving platform 117 supported by the vehicle frame assembly 101, the driver's seat 118 mounted rearward of the driving platform 117, the steering wheel 119 mounted forward of the driver's seat 118 with residing space for the driver being secured, the right and left fenders 108 mounted on the lateral sides of the driver's seat 118, and the handrails 125 and 126 used by the driver when boarding or leaving the tractor from either lateral side of the vehicle body. The driving platform 117 includes the right and left boarding sections 117A in areas defined laterally outward of the steering wheel 119 and forward of the right and left fenders 108 as viewed from the top for allowing the driver to board or leave the tractor from either lateral side of the vehicle body. The handrails 125 and 126 are provided at the front side and the rear side of the boarding sections 117A. The front first handrail 125 has the grip 125B extending from the support for the first handrail (central pillar 116) toward the access space directly above the boarding section 117A.

With the above arrangement, the driver can board or leave the tractor through the boarding sections 117A stably and safely with a three-point support established by a foot stepping on the boarding section 117A, one hand gripping the first handrail 125 mounted on the front side of the vehicle body, and the other hand gripping one of the second handrails 126.

Further, the grip 125B of the first handrail 125 extends toward the access space, which reduces a distance between the first handrail 125 and the second handrail 126. This allows the driver to easily hold the front and rear handrails 125 and 126 with both hands when boarding or leaving the tractor through the boarding section 117A. Additionally, the driver, when gripping the front and rear handrails 125 and 126 with both hands, can bring both arms to a position near his or her body where he or she can easily pull his or her body toward the vehicle body with an increased force.

As a result, the driver can comfortably and easily board or leave the tractor from the boarding section 117A.

In this tractor, the grip 125B of the first handrail 125 has an extension end entering the access space.

Such an arrangement further reduces the distance between the first handrail 125 and the second handrail 126, which allows the driver to easily hold the front and rear handrails 125 and 126 with both hands when boarding or leaving the tractor from the boarding section 117A. Additionally, the driver, when gripping the front and rear handrails 125 and 126 with both hands, can bring both arms to a position near his or her body where he or she can easily pull his or her body toward the vehicle body with in increased force.

As a result, the driver can more easily board or leave the tractor from the boarding section 117A.

In this tractor, the driver's section 105 includes the plurality of control pedals 121 to 123 distributed in the right and left boarding sections 117A. The first handrail 125 is mounted on the left side of the vehicle body, in which a fewer number of the control pedals 121 to 123 is mounted.

With the above arrangement, the driver can more easily board or leave the tractor from the left boarding section 117A owing to the first handrail mounted on the left side where the fewer number of control pedals 121 to 123 are mounted on the left side.

In this tractor, the first handrail 125 has the downward extension 125C extending downward straight from the extending end of the grip 125B.

With this arrangement, the driver can grip the downward extension 125C that is easily accessible when standing on the ground at the outside of the vehicle if he or she feels difficulty in boarding or leaving the tractor because the driving platform is arranged at a raised level, for example. Thus, the driver can easily pull his or her body toward the vehicle body and easily board or leave the tractor from the boarding section 117A. Additionally, the driver, when gripping the downward extension 125C and the second handrail 126 with both hands, can bring both arms to a position near his or her body where he or she can easily pull his or her body toward the vehicle body with in an increased force.

As a result, the driver can easily board or leave the tractor with a raised driving platform 117 from the boarding section 117A.

In particular, when the downward extension 125C enters the access space, a distance between the downward extension 125C and the second handrail 126 is reduced, which allows the driver to more easily hold the downward extension 125C and the second handrail 126 when boarding or leaving the raised driving platform 117 from the boarding section 117A. Additionally, the driver, when gripping the downward extension 125C and the second handrail 126 with both hands, can bring both arms to a position near his or her body where he or she can easily pull his or her body toward the vehicle body with an increased force.

As a result, the driver can more easily board or leave the tractor with a raised driving platform 117 from the boarding section 117A.

Referring to Figs. 13 and 16, the right and left fenders 108 have the right and left guard elements 129 for preventing foreign matter from interfering with edges of an exposed outer rim 108C of each of the fenders 108. Each of the right and left guard elements 129 is made of round-bar steel and welded to each of the exposed outer rims 108C over the entire length of the exposed outer rim 108C in each of the fenders 108.

Such an arrangement prevents foreign matter from interfering with the edges of the exposed outer rims 108C of the fenders 108 and reinforces the fenders 108.

The driving platform 117 has the right and left guard elements 130 for preventing foreign matter from interfering with edges of right and left exposed outer edge portions 117C of the platform 117. Each of the right and left guard elements 130 is made of round-bar steel and welded to each of the right and left exposed outer edge portions 117C over the entire length of the exposed outer edge portion 117C in the platform 117.

Such an arrangement prevents foreign matter from interfering with the edges of the exposed outer edge portions 117C of the platform 117 and reinforces the platform 117.

Although not shown, the guard elements 129 for the fenders and the guard elements 130 for the driving platform may be made of round steel pipe with circular section.

Further, as illustrated in Fig. 17, the guard elements 129 for the fenders and the guard elements 130 for the driving platform may be made of resin such as rubber elements fitted on and adhered to the exposed outer rims 108C of the fenders or the exposed outer edge portions 117C of the driving platform 117.

Referring to Fig. 18, the motor section 102 includes a lock mechanism 131 in the engine compartment 127 for fixedly retaining the hood 115 in the closed position. The lock mechanism 131 typically includes a front-back lock pin 132 movable in unison with pivotal movement of the hood 115, a guide plate 133 for guiding the lock pin 132 to a predetermined lock position, a hook element 134 pivotable between a lock position corresponding to the lock position of the lock pin 132 and an unlock position, a tension spring 135 for urging the hook element 134 to return to the lock position, and a control rod 136 for pivoting the hook element 134 acting against the tension spring 135 to the unlock position.

The guide plate 133 is mounted upright on a bottom plate 137 of the front frame 110 forming a front bottom surface of the motor section 102. The hook element 134 is supported by the guide plate 133 to be laterally pivotable about a front-back support shaft 138. The hook element 134 has an acting portion 134A at an upper part thereof for allowing the hook element to be pivoted to the unlock position via the lock pin 132. The tension spring 135 extends from the bottom plate 137 to the hook element 134. The control rod 136 is connected to a lower end part of the hook element 134 to be pivotable in unison with the hook element, extending rightward from the lower end part of the hook element 134 to a right end of the bottom plate 137. The control rod 136 has a control element 136A provided at a right end thereof for allowing the control rod 16 to be pushed up from the lock position to the unlock position. The bottom plate 137 has a through bore 137A that is aligned with the control element 136A positioned at the right end of the bottom plate 137 for allowing insertion of a bar-shaped tool 139.

With the above arrangement for the lock mechanism 131, when the hood 115 is manually operated to the closed position, the lock pin 132 moves downward along with the pivotal movement of the hood 115. When the lock pin 132 comes into contact with the acting portion 134A of the hook element 134 following such downward pivotal movement, the hook element 134 is pivoted and retracted to the unlock position against the action of the tension spring 135. When the lock pin 132 comes into contact with the guide plate 133 following the above downward pivotal movement, the lock pin 132 is guided to the predetermined lock position. Then, the hood 115 reaches the closed position to move the lock pin 132 to an underside of the acting portion 134A. In response to this movement of the lock pin 132, the hook element 134 is returned to the lock position by the action of the tension spring 135 to hook the lock pin 132. In this manner, the lock mechanism 131 fixedly retains the hood 15 in the closed position.

Further, when a manual operation is performed to insert the bar-shaped tool 139 into the through bore 137A of the bottom plate 137 thereby to push up the control rod 136 by the bar-shaped tool 139 from the lock position to the unlock position, the hook element 134 is pivoted and retracted to the unlock position against the action of the tension spring 135. In this manner, the lock mechanism 131 releases the hold of the hood 115 in the closed position and allows the manual operation for moving the hood 115 from the closed position to the open position.

More particularly, the lock mechanism 131 is designed to release the control rod 136 using the bar-shaped tool 139 to release the hold of the hood 115 in the closed position. This arrangement prevents easy release of the hold of the hood 115 in the closed position.

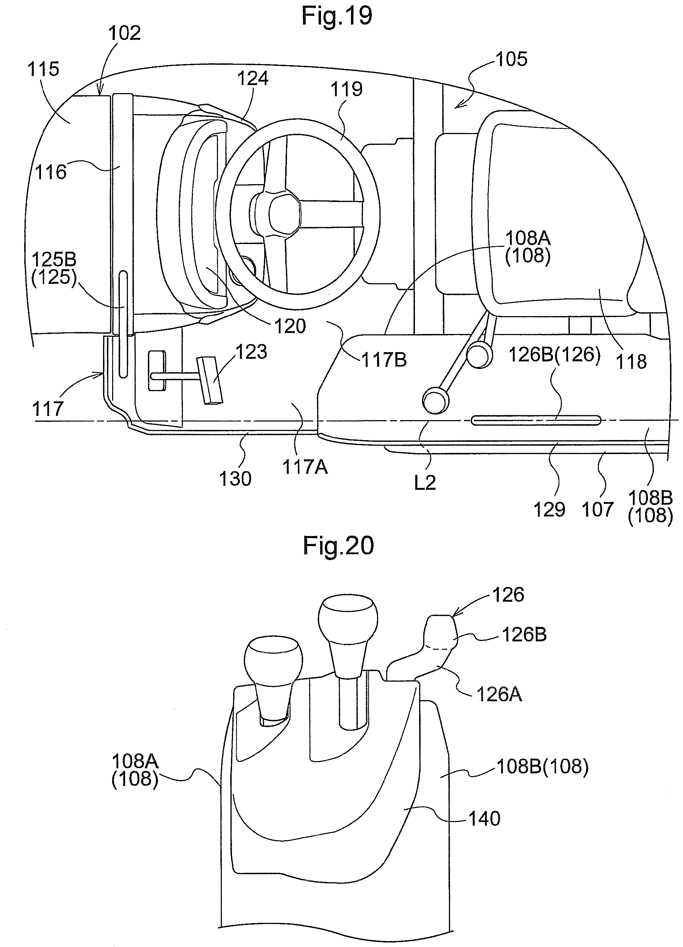

Modifications not covered by the present invention
[1] The wheeled work vehicle in the foregoing embodiment may be a half-tracked work vehicle including right and left tracks as the right and left rear propelling devices instead of the right and left rear wheels 107.
   In furtherance thereto, the work vehicle may dispense with the right and left front wheels 106 and may be formed as a fully tracked work vehicle including right and left tracks having a fore-and-aft length extending from a rear axle to a position where the front wheels would be mounted.
[2] The first handrail 125 may be provided on a right side of the vehicle body. Alternatively, the first handrails 125 may be provided on both lateral sides of the vehicle body.
[3] The first handrail 125 may be supported by a steering post that supports the steering wheel 119, or a cover element such as the cover panel 124 that covers and conceals the steering shaft. Such an arrangement is useful and suitable for a front-mounted mower with the motor section 102 mounted rearward of the vehicle body.
[4] The first handrail 125 may be a vertically extending element with an upper part thereof supported by an upper part of the central pillar 116 and with a lower part thereof supported by a laterally extending support element that supports a front end part of the driving platform 117. Such an arrangement is particularly useful and suitable for a high-built work vehicle
[5] The first handrail 125 may be provided with the grip 125B having a lateral outer portion that extends along the fron-back direction of the vehicle body.
[6] As illustrated in Fig. 19, the first handrail 125 may be provided at the left outer side of the rotation center of the steering wheel 119 with the grip 125B extending laterally straight along the lateral direction of the vehicle body.
[7] The right and left second handrails 126 each may be made of resin or round steel pipe with circular section.
[8] As illustrated in Fig. 20, the right and left second handrails 126 may be made of resin. When right and left resin lever guides 140 are provided on top surfaces of the right and left fenders 108, the right and left second handrails 126 may be formed integrally with the right and left lever guides 140.
[9] As illustrated in Fig. 20, the second handrail 126 may have the grip 126B positioned laterally outward of the upward extension 126A. With such an arrangement, the driver can easily hold the grip 126B of the second handrail 126 when standing on the ground at the outside of the vehicle body. This arrangement is particularly useful and suitable for a high-built vehicle in which the grip 126B of the second handrail 126 is hard to hold from the outside of the vehicle body.
[10] As illustrated in Fig. 20, the second handrail 126 may be provided with a lateral outer side of the grip 126B positioned laterally outward of a lateral outer side of the right or left fender 108. With such an arrangement, the driver can easily hold the grip 126B of the second handrail 126 when standing on the ground at the outside of the vehicle body. This arrangement is particularly useful and suitable for a high-built vehicle in which the grip 126B of the second handrail 126 is hard to hold from the outside of the vehicle body.
[11] The work vehicle is not limited to the tractor, but may be any other vehicle such as mid-mounted mower or a front-mounted mower, which allows the driver to board or leave the vehicle from a lateral side of the vehicle.

## Claims

1. Tractor operable with a work implement configured to be connected to a rear part of a vehicle body, the tractor comprising:
a driver's seat (13) mounted rearward of the vehicle body, the driver's seat (13) being opened to an outside of the vehicle body;
right and left fenders (7) mounted laterally outward of the driver's seat (13);
a protection frame (8) mounted rearward of the vehicle body in standing position;
the protection frame (8) including right and left posts (29) mounted laterally outward of lateral opposite ends of a backrest (13A) of the driver's seat (13), and
a partition (24) dividing the entire region of the vehicle body into a driver's region (22) and a rear region (23), the partition (24) being disposed at a lateral side or a rear side of the backrest (13A) and forward of rear ends of the right and left fenders (7), and the partition (24) having a lateral width (W2) thereof smaller than a lateral width (W1) between outer ends of the right and left fenders (7), and greater than a width of the backrest (13A) of the driver's seat (13), and the partition (24) having a vertical dimension (H) substantially corresponding to a vertical dimension of the backrest (13A) between an upper part and a lower part thereof, and the partition (24) being configured to block a region (22) between the right post (29) and a right lateral end of the backrest (13A), and a region between the left post (29) and a left lateral end of the backrest (13A).

2. The tractor according to claim 1, **characterized in that** a control element (C) is provided forward of the partition (24) for controlling a device (A) provided in the vehicle body.

3. The tractor according to claim 2, **characterized in that**
the device (A) comprises an actuating section (B) for actuating the work implement detachably connected to a rear part of the vehicle body;
that the control element (C) comprises a work control element (C) for manually operating the actuating section (B); and
that the actuating section (B) is mounted rearward of the partition (24).

4. The tractor according to claim 3, **characterized in that**
the actuating section (B) comprises a lift device (12) for vertically moving the work implement; and
that the control element (C) comprises a lift control lever (21) for manually operating the lift device (12).

5. The tractor according to claim 3 or 4, **characterized in that**
the actuating section (B) comprises a PTO shaft (11) for outputting power to the work implement; and
that the control element (C) comprises a PTO control lever (20) for manually operating power transmission for the PTO shaft (11).

6. The tractor according to any one of claims 2 to 5, **characterized in that**
the control element (C) is provided laterally outward of the driver's seat (13), and
that the partition (24) has a vertical dimension (H) greater than a vertical dimension of a grip (18A, 19A, 20A, 21A) of the control element (C), the partition (24) being provided at a same level as the grip (18A).

7. The tractor according to any one of claims 2 to 6, **characterized in that** the control element (C) is provided above the right and left fenders (7).

8. The tractor according to any one of claims 1 to 7, **characterized in that** the partition (24) has a lateral width (W2) greater than a distance (L) between inner ends of the right and left fenders (7).

9. The tractor according to any one of claims 1 to 8, **characterized in that** the partition (24) is supported by the protection frame (8).

10. The tractor according to any one of claims 1 to 9, **characterized in that**
the protection frame (8) has a lower frame component (8A) fixed to the vehicle body in standing position, and an upper frame component (8C) connected to an upper part of the lower frame component (8A) to be vertically pivotable via hinges (8B), and
that the partition (24) is provided at a position lower than the hinges (8B).

11. The tractor according to any one of claims 1 to 10, **characterized in that**
the partition (24) has such a lateral width (W2) as preventing the partition (24) from protruding from lateral outer ends of the right and left posts (29).

12. The tractor according to any one of claims 1 to 11, **characterized in that**
the partition (24) has a lateral width (W2) at least extending between the right and left posts (29).

13. The tractor according to any one of claims 1 to 11, **characterized in that**
the partition (24) comprises a left wall part (24A) having a lateral width (W4) extending between the left post (29) and the backrest (13A), and a right wall part (24B) having a lateral width (W5) extending between the right post (29) and the backrest (13A).

14. The tractor according to claim 12 or 13, **characterized in that** the partition (24) is provided within a front-back width (W3) of the right and left posts (29).

15. The tractor according to any one of claims 1 to 14, **characterized in that** the partition (24) has transparency.

16. The tractor according to any one of claims 1 to 15, **characterized in that** the partition (24) includes a principal component (26) comprising a mesh screen.

17. The tractor according to any one of claims 1 to 16, **characterized in that**
the tractor further comprises a license plate holder (30) to which a license plate is attached, and
that the license plate holder (30) is provided rearward of the partition (24).

18. The tractor according to any one of claims 1 to 16, **characterized in that**
the tractor further comprises a license plate holder (30) to which a license plate is attached,
and
that the license plate holder (30) is mounted between the right and left posts (29) and within the front-back width (W3) of the right and left posts (29).

## Patentansprüche

1. Traktor, der mit einem Arbeitsgerät betreibbar ist, das dazu ausgestaltet ist, mit einem hinteren Teil einer Fahrzeugkarosserie verbunden zu werden, wobei der Traktor umfasst:
einen Fahrersitz (13), der rückwärts von der Fahrzeugkarosserie montiert ist, wobei der Fahrersitz (13) zu einer Außenseite der Fahrzeugkarosserie geöffnet wird,
rechte und linke Kotflügel (7), die seitlich auswärts von dem Fahrersitz (13) montiert sind,
einen Schutzrahmen (8), der rückwärts von der Fahrzeugkarosserie in stehender Position montiert ist,
wobei der Schutzrahmen (8) rechte und linke Pfosten (29) beinhaltet, die seitlich auswärts von seitlichen gegenüberliegenden Enden einer Rückenlehne (13A) von dem Fahrersitz (13) montiert sind, und
eine Trennwand (24), die den gesamten Bereich der Fahrzeugkarosserie in einen Fahrerbereich (22) und einen hinteren Bereich (23) teilt, wobei die Trennwand (24) an einer seitlichen Seite oder einer hinteren Seite der Rückenlehne (13A) und vorwärts von hinteren Enden der rechten und linken Kotflügel (7) angeordnet ist, und die Trennwand (24) eine seitliche Breite (W2) davon aufweist, die kleiner als eine seitliche Breite (W1) zwischen äußeren Enden der rechten und linken Kotflügel (7) und größer als eine Breite der Rückenlehne (13A) des Fahrersitzes (13) ist, und die Trennwand (24) eine vertikale Abmessung (H) aufweist, die im Wesentlichen einer vertikalen Abmessung der Rückenlehne (13A) zwischen einem oberen Teil und einem unteren Teil davon entspricht, und die Trennwand (24) dazu ausgestaltet ist, einen Bereich (22) zwischen dem rechten Pfosten (29) und einem rechten seitlichen Ende der Rückenlehne (13A) und einen Bereich zwischen dem linken Pfosten (29) und einem linken seitlichen Ende der Rückenlehne (13A) zu blockieren.

2. Traktor nach Anspruch 1, **dadurch gekennzeichnet, dass** ein Steuerelement (C) vorwärts von der Trennwand (24) zum Steuern einer in der Fahrzeugkarosserie vorgesehenen Vorrichtung (A) vorgesehen ist.

3. Traktor nach Anspruch 2, **dadurch gekennzeichnet, dass**
die Vorrichtung (A) eine Betätigungssektion (B) zum Betätigen des Arbeitsgerätes umfasst, das abnehmbar mit einem hinteren Teil der Fahrzeugkarosserie verbunden ist,
dass das Steuerelement (C) ein Arbeitssteuerelement (C) zum manuellen Bedienen der Betätigungssektion (B) umfasst, und
dass die Betätigungssektion (B) rückwärts von der Trennwand (24) montiert ist.

4. Traktor nach Anspruch 3, **dadurch gekennzeichnet, dass**
die Betätigungssektion (B) eine Hebevorrichtung (12) zum vertikalen Bewegen des Arbeitsgeräts umfasst, und
dass das Steuerelement (C) einen Hebesteuerhebel (21) zum manuellen Bedienen der Hebevorrichtung (12) umfasst.

5. Traktor nach Anspruch 3 oder 4, **dadurch gekennzeichnet, dass**
die Betätigungssektion (B) eine PTO-Welle (11) zum Ausgeben von Leistung an das Arbeitsgerät umfasst, und
dass das Steuerelement (C) einen PTO-Steuerhebel (20) zum manuellen Bedienen einer Energieübertragung für die PTO-Welle (11) umfasst.

6. Traktor nach einem der Ansprüche 2 bis 5, **dadurch gekennzeichnet, dass**
das Steuerelement (C) seitlich auswärts von dem Fahrersitz (13) vorgesehen ist, und
dass die Trennwand (24) eine vertikale Abmessung (H) aufweist, die größer als eine vertikale Abmessung eines Griffes (18A, 19A, 20A, 21A) des Steuerelements (C) ist, wobei die Trennwand (24) auf einer gleichen Ebene wie der Griff (18A) vorgesehen ist.

7. Traktor nach einem der Ansprüche 2 bis 6, **dadurch gekennzeichnet, dass** das Steuerelement (C) oberhalb der rechten und linken Kotflügel (7) vorgesehen ist.

8. Traktor nach einem der Ansprüche 1 bis 7, **dadurch gekennzeichnet, dass** die Trennwand (24) eine seitliche Breite (W2) aufweist, die größer als ein Abstand (L) zwischen inneren Enden der rechten und linken Kotflügel (7) ist.

9. Traktor nach einem der Ansprüche 1 bis 8, **dadurch gekennzeichnet, dass**
die Trennwand (24) von dem Schutzrahmen (8) getragen wird.

10. Traktor nach einem der Ansprüche 1 bis 9, **dadurch gekennzeichnet, dass**
der Schutzrahmen (8) eine untere Rahmenkomponente (8A), die an der Fahrzeugkarosserie in stehender Position befestigt ist, und eine obere Rahmenkomponente (8C), die mit einem oberen Teil der unteren Rahmenkomponente (8A) verbunden ist, um vertikal über Drehgelenke (8B) schwenkbar zu sein, aufweist, und
dass die Trennwand (24) an einer Position vorgesehen ist, die niedriger als die Drehgelenke (8B) ist.

11. Traktor nach einem der Ansprüche 1 bis 10, **dadurch gekennzeichnet, dass**
die Trennwand (24) so eine seitliche Breite (W2) aufweist, dass sie verhindert, dass die Trennwand (24) von seitlichen äußeren Enden der rechten und linken Pfosten (29) herausragt.

12. Traktor nach einem der Ansprüche 1 bis 11, **dadurch gekennzeichnet, dass**
die Trennwand (24) eine seitliche Breite (W2) aufweist, die sich zumindest zwischen den rechten und linken Pfosten (29) erstreckt.

13. Traktor nach einem der Ansprüche 1 bis 11, **dadurch gekennzeichnet, dass**
die Trennwand (24) einen linken Wandteil (24A), der eine seitliche Breite (W4) aufweist, die sich zwischen dem linken Pfosten (29) und der Rückenlehne (13A) erstreckt, und einen rechten Wandteil (24B), der einen seitliche Breite (W5) aufweist, die sich zwischen dem rechten Pfosten (29) und der Rückenlehne (13A) erstreckt, umfasst.

14. Traktor nach Anspruch 12 oder 13, **dadurch gekennzeichnet, dass** die Trennwand (24) innerhalb einer Vorne-Hinten-Breite (W3) der rechten und linken Pfosten (29) vorgesehen ist.

15. Traktor nach einem der Ansprüche 1 bis 14, **dadurch gekennzeichnet, dass** die Trennwand (24) eine Durchsichtigkeit aufweist.

16. Traktor nach einem der Ansprüche 1 bis 15, **dadurch gekennzeichnet, dass** die Trennwand (24) eine Hauptkomponente (26) beinhaltet, die ein Maschensieb umfasst.

17. Traktor nach einem der Ansprüche 1 bis 16, **dadurch gekennzeichnet, dass**
der Traktor ferner einen Nummernschildhalter (30) umfasst, an welchem ein Nummernschild angebracht ist, und
dass der Nummernschildhalter (30) rückwärts von der Trennwand (24) vorgesehen ist.

18. Traktor nach einem der Ansprüche 1 bis 16, **dadurch gekennzeichnet, dass**
der Traktor ferner einen Nummernschildhalter (30) umfasst, an welchem ein Nummernschild angebracht ist,
und
dass der Nummernschildhalter (30) zwischen den rechten und linken Pfosten (29) und innerhalb der Vorne-Hinten-Breite (W3) der rechten und linken Pfosten (29) montiert ist.

## Revendications

1. Tracteur pouvant fonctionner avec un outil de travail configuré pour être raccordé à une partie arrière d'un corps de véhicule, le tracteur comprenant :
un siège de conducteur (13) monté à l'arrière du corps de véhicule, le siège de conducteur (13) étant ouvert vers un extérieur du corps de véhicule ;
des garde-boues droit et gauche (7) monté latéralement à l'extérieur du siège de conducteur (13) ;
un bâti de protection (8) monté à l'arrière du corps de véhicule en position debout ;
le bâti de protection (8) comprenant des montants droit et gauche (29) montés latéralement vers l'extérieur des extrémités opposées latérales d'un dossier (13A) du siège de conducteur (13), et
une séparation (24) divisant toute la région du corps de véhicule en une région de conducteur (22) et en une région arrière (23), la séparation (24) étant disposée sur un côté latéral ou un côté arrière du dossier (13A) et à l'avant des extrémités arrière des garde-boues droit et gauche (7), une largeur latérale (W2) de la séparation (24) étant inférieure à une largeur latérale (W1) entre les extrémités externes des garde-boues droit et gauche (7), et supérieure à une largeur du dossier (13A) du siège de conducteur (13), et la séparation (24) ayant une dimension verticale (H) correspondant sensiblement à une dimension verticale du dossier (13A) entre une partie supérieure et une partie inférieure de celui-ci, et la séparation (24) étant configurée pour bloquer une région (22) entre le montant droit (29) et une extrémité latérale droite du dossier (13A), et une région entre le montant gauche (29) et une extrémité latérale gauche du dossier (13A).

2. Tracteur selon la revendication 1, **caractérisé en ce qu'**un élément de commande (C) est prévu à l'avant de la séparation (24) pour commander un dispositif (A) prévu dans le corps de véhicule.

3. Tracteur selon la revendication 2, **caractérisé en ce que** :
le dispositif (A) comprend une section d'actionnement (B) pour actionner l'outil de travail raccordé de manière détachable à une partie arrière du corps de véhicule ;
**en ce que** l'élément de commande (C) comprend un élément de commande de travail (C) pour actionner manuellement la section d'actionnement (B) ; et
**en ce que** la section d'actionnement (B) est montée à l'arrière de la séparation (24).

4. Tracteur selon la revendication 3, **caractérisé en ce que** :
la section d'actionnement (B) comprend un dispositif de levage (12) pour déplacer verticalement l'outil de travail ; et
**en ce que** l'élément de commande (C) comprend un levier de commande de levage (21) pour actionner manuellement le dispositif de levage (12).

5. Tracteur selon la revendication 3 ou 4, **caractérisé en ce que** :
la section d'actionnement (B) comprend un arbre PTO (11) pour fournir l'énergie à l'outil de travail ; et
**en ce que** l'élément de commande (C) comprend un levier de commande PTO (20) pour actionner manuellement la transmission de puissance pour l'arbre PTO (11).

6. Tracteur selon l'une quelconque des revendications 2 à 5, **caractérisé en ce que** :
l'élément de commande (C) est prévu latéralement à l'extérieur du siège de conducteur (13), et
**en ce que** la séparation (24) a une dimension verticale (H) supérieure à une dimension verticale d'une poignée (18A, 19A, 20A, 21A) de l'élément de commande (C), la séparation (24) étant prévue au même niveau que la poignée (18A).

7. Tracteur selon l'une quelconque des revendications 2 à 6, **caractérisé en ce que** l'élément de commande (C) est prévu au-dessus des garde-boues droit et gauche (7).

8. Tracteur selon l'une quelconque des revendications 1 à 7, **caractérisé en ce que** la séparation (24) a une largeur latérale (W2) supérieure à une distance (L) entre les extrémités internes des garde-boues droit et gauche (7).

9. Tracteur selon l'une quelconque des revendications 1 à 8, **caractérisé en ce que** :
la séparation (24) est supportée par le bâti de protection (8).

10. Tracteur selon l'une quelconque des revendications 1 à 9, **caractérisé en ce que** :
le bâti de protection (8) a un composant de bâti inférieur (8A) fixé sur le corps de véhicule en position debout, et un composant de bâti supérieur (8C) raccordé à une partie supérieure du composant de bâti inférieur (8A) pour pouvoir pivoter verticalement via des charnières (8B), et
**en ce que** la séparation (24) est prévue dans une position plus basse que les charnières (8B).

11. Tracteur selon l'une quelconque des revendications 1 à 10, **caractérisé en ce que** :
la séparation (24) a une largeur latérale (W2) telle qu'elle empêche la séparation (24) de faire saillie des extrémités externes latérales des montants droit et gauche (29).

12. Tracteur selon l'une quelconque des revendications 1 à 11, **caractérisé en ce que** :
la séparation (24) a une largeur latérale (W2) s'étendant au moins entre les montants droit et gauche (29).

13. Tracteur selon l'une quelconque des revendications 1 à 11, **caractérisé en ce que** :
la séparation (24) comprend une partie de paroi gauche (24A) ayant une largeur latérale (W4) s'étendant entre le montant gauche (29) et le dossier (13A), et une partie de paroi droite (24B) ayant une largeur latérale (W5) s'étendant entre le montant droit (29) et le dossier (13A).

14. Tracteur selon la revendication 12 ou 13, **caractérisé en ce que** la séparation (24) est prévue à l'intérieur d'une largeur avant-arrière (W3) des montants droit et gauche (29).

15. Tracteur selon l'une quelconque des revendications 1 à 14, **caractérisé en ce que** la séparation (24) présente une transparence.

16. Tracteur selon l'une quelconque des revendications 1 à 15, **caractérisé en ce que** la séparation (24) comprend un composant principal (26) comprenant un tamis à mailles.

17. Tracteur selon l'une quelconque des revendications 1 à 16, **caractérisé en ce que** :
le tracteur comprend en outre un support de plaque d'immatriculation (30) auquel une plaque d'immatriculation est fixée, et
**en ce que** le support de plaque d'immatriculation (30) est prévu à l'arrière de la séparation (24).

18. Tracteur selon l'une quelconque des revendications 1 à 16, **caractérisé en ce que** :
le tracteur comprend en outre un support de plaque d'immatriculation (30) auquel une plaque d'immatriculation est fixée, et
**en ce que** le support de plaque d'immatriculation (30) est monté entre les montants droit et gauche (29) et à l'intérieure de la largeur avant-arrière (W3) des montants droit et gauche (29).
